(19) Europäisches Patentamt / European Patent Office / Office européen des brevets

(11) **EP 4 694 278 A1**

(12) **EUROPEAN PATENT APPLICATION**
published in accordance with Art. 153(4) EPC

(43) Date of publication:
**11.02.2026 Bulletin 2026/07**

(21) Application number: **23929296.4**

(22) Date of filing: **30.03.2023**

(51) International Patent Classification (IPC):
$H04W\ 24/02^{(2009.01)}$    $G06N\ 3/02^{(2006.01)}$

(52) Cooperative Patent Classification (CPC):
**G06N 3/02; H04W 24/02**

(86) International application number:
**PCT/CN2023/085086**

(87) International publication number:
**WO 2024/197699 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **FAN, Jiangsheng**
  **Dongguan, Guangdong 523860 (CN)**
• **YOU, Xin**
  **Dongguan, Guangdong 523860 (CN)**

(74) Representative: **RGTH
Patentanwälte PartGmbB
Neuer Wall 10
20354 Hamburg (DE)**

(54) **INFORMATION DETERMINATION METHOD AND APPARATUS, INFORMATION SENDING METHOD AND APPARATUS, AND DEVICE AND MEDIUM**

(57)     The present application belongs to the field of communications. Disclosed are an information determination method and apparatus, an information sending method and apparatus, and a device, a medium and a program product. The information determination method is performed by a first device, and the method comprises: determining at least one group of time-domain information and/or frequency-domain information associated with a first model, wherein the first model is an AI model or an ML model, and the time-domain information and/or the frequency-domain information are/is associated with a model monitoring process of the first model. By means of the method, at least one group of time-domain information associated with a first model is determined, such that different time-domain information associated with different models can be determined, and different time-domain information can thus be used for different models for performing model monitoring.

Determine at least one group of time domain
information/frequency domain information
associated with a first model    310

FIG. 3

**Description**

**TECHNICAL FIELD**

Embodiments of this application relate to the field of communication, and in particular, to an information determining method and apparatus, an information transmission method and apparatus, a device, a medium, and a program product.

**BACKGROUND**

With continuous development of artificial intelligence (Artificial Intelligence, AI) and machine learning (Machine Learning, ML) technologies, integration of communication technologies with the AI/ML technology becomes one of trends in future communication. To cope with complexity and diversity of scenarios of communications systems, an AI/ML model is introduced in a communications system.

During the use of the AI/ML model, a terminal device and a network device are required to monitor performance of the AI/ML model.

**SUMMARY**

This application provides an information determining method and apparatus, an information transmission method and apparatus, a device, a medium, and a program product. The technical solutions at least include the following aspects.

According to an aspect of embodiments of this application, there is provided an information determining method. The method is executed by a first device, and the method includes:

determining at least one group of time domain information associated with a first model,

where the first model is an AI model or an ML model, and the time domain information is associated with a model monitoring process of the first model.

According to another aspect of embodiments of this application, there is provided an information transmission method. The method is executed by a second device, and the method includes:

transmitting first information to a first device,

where the first information is associated with a model monitoring process of a first model, and the first model is an AI model or an ML model.

According to another aspect of embodiments of this application, there is provided an information determining apparatus. The apparatus includes:

a first determining module, configured to determine at least one group of time domain information associated with a first model,

where the first model is an AI model or an ML model, and the time domain information is associated with a model monitoring process of the first model.

According to another aspect of embodiments of this application, there is provided an information transmission apparatus. The apparatus includes:

a first transmission module, configured to transmit first information to a first device,

where the first information is associated with a model monitoring process of a first model, and the first model is an AI model or an ML model.

According to another aspect of embodiments of this application, there is provided a first device. The first device includes:

a processor;

a transceiver connected to the processor; and

a memory configured to store an instruction executable by the processor,

where the processor is configured to load and execute the executable instruction to implement the information determining method according to the foregoing aspects.

According to another aspect of embodiments of this application, there is provided a second device. The second device includes:

a processor;
a transceiver connected to the processor; and
a memory configured to store an instruction executable by the processor,
where the processor is configured to load and execute the executable instruction to implement the information transmission method according to the foregoing aspects.

According to another aspect of embodiments of this application, there is provided a computer-readable storage medium. The computer-readable storage medium stores at least one instruction, at least one segment of program, or a code set or an instruction set, and the at least one instruction, the at least one segment of program, or the code set or the instruction set is loaded and executed by a processor to cause a first device to implement the information determining method according to the foregoing aspects, and to cause a second device to implement the information transmission method according to the foregoing aspects.

According to another aspect of embodiments of this application, there is provided a computer program product or computer program. The computer program product or computer program includes computer instructions stored on a computer-readable storage medium. A processor reads the computer instructions from the computer-readable storage medium and executes the computer instructions to cause a first device to implement the information determining method according to the foregoing aspects, and to cuase a second device to implement the information transmission method according to the foregoing aspects.

Technical solutions provided in embodiments of this application may realize the following beneficial effects.

At least one group of time domain information associated with the first model is determined, where the first model is an AI model or an ML model, and the time domain information is associated with the model monitoring process of the first model, so that different time domain information associated with different models can be determined, and model monitoring is performed on different models by using different time domain information.

**BRIEF DESCRIPTION OF DRAWINGS**

To describe the technical solutions in embodiments of this application more clearly, the following briefly describes the accompanying drawings required for describing the embodiments of this application. Apparently, the accompanying drawings in the following description merely show some embodiments of this application, and persons of ordinary skill in the art may still derive other drawings from these accompanying drawings without creative efforts.

FIG. 1 is a schematic diagram of a network architecture according to an example embodiment of this application.
FIG. 2 is a schematic diagram of a network system architecture according to an example embodiment of this application.
FIG. 3 is a flowchart of an information determining method according to an example embodiment of this application.
FIG. 4 is a flowchart of an information determining method according to an example embodiment of this application.
FIG. 5 is a schematic diagram of a resource configuration scheme according to an example embodiment of this application.
FIG. 6 is a schematic diagram of a resource configuration scheme according to an example embodiment of this application.
FIG. 7 is a schematic diagram of a resource configuration scheme according to an example embodiment of this application.
FIG. 8 is a schematic diagram of a resource configuration scheme according to an example embodiment of this application.
FIG. 9 is a flowchart of an information determining method according to an example embodiment of this application.
FIG. 10 is a flowchart of an information determining method according to an example embodiment of this application.
FIG. 11 is a flowchart of an information determining method according to an example embodiment of this application.
FIG. 12 is a flowchart of an information determining method according to an example embodiment of this application.
FIG. 13 is a flowchart of an information determining method according to an example embodiment of this application.
FIG. 14 is a flowchart of an information transmission method according to an example embodiment of this application.
FIG. 15 is a flowchart of an information transmission method according to an example embodiment of this application.
FIG. 16 is a flowchart of an information transmission method according to an example embodiment of this application.
FIG. 17 is a flowchart of an information transmission method according to an example embodiment of this application.

FIG. 18 is a flowchart of an information transmission method according to an example embodiment of this application.

FIG. 19 is a block diagram of an information determining apparatus according to an example embodiment of this application.

FIG. 20 is a block diagram of an information transmission apparatus according to an example embodiment of this application.

FIG. 21 is a schematic structural diagram of a first device or a second device according to an example embodiment of this application.

## DESCRIPTION OF EMBODIMENTS

To make the objectives, technical solutions, and advantages of this application clearer, the following further describes the implementations of this application in detail with reference to the accompanying drawings.

Example embodiments are described in detail herein, and examples of the example embodiments are presented in the accompanying drawings. When the following description relates to the accompanying drawings, unless specified otherwise, same numbers in different accompanying drawings represent a same or similar element. Implementations described in the following example embodiments do not represent all implementations consistent with this application. On the contrary, they are only examples of apparatuses and methods that are described in the appended claims in detail and that are consistent with some aspects of this application.

Terms used in this application are merely intended to describe specific embodiments, but are not intended to limit this application. The singular forms of "a/an", "said", and "the" used in this application and the appended claims are also intended to include plural forms, unless the context clearly implies otherwise. It should also be understood that the term "and/or" as used herein refers to and includes any or all possible combinations of one or more of associated listed items.

It should be noted that the user information (including but not limited to user equipment information, user personal information, and the like) and data (including but not limited to data used for analysis, data stored, data displayed, and the like) involved in this application are all information and data that have been authorized by a user or fully authorized by all related parties. The collection, use, and processing of related data must comply with related laws, regulations, and standards of related countries and regions.

It should be understood that although the terms such as first and second may be used in this application to describe various types of information, such information is not limited to these terms. These terms are merely used to distinguish information of a same type from each other. For example, without departing from the scope of this application, a first parameter may also be referred to as a second parameter, and similarly, a second parameter may also be referred to as a first parameter. Depending on the context, the term "if" as used herein may be interpreted as "in a case in which", "when", or "in response to determining that".

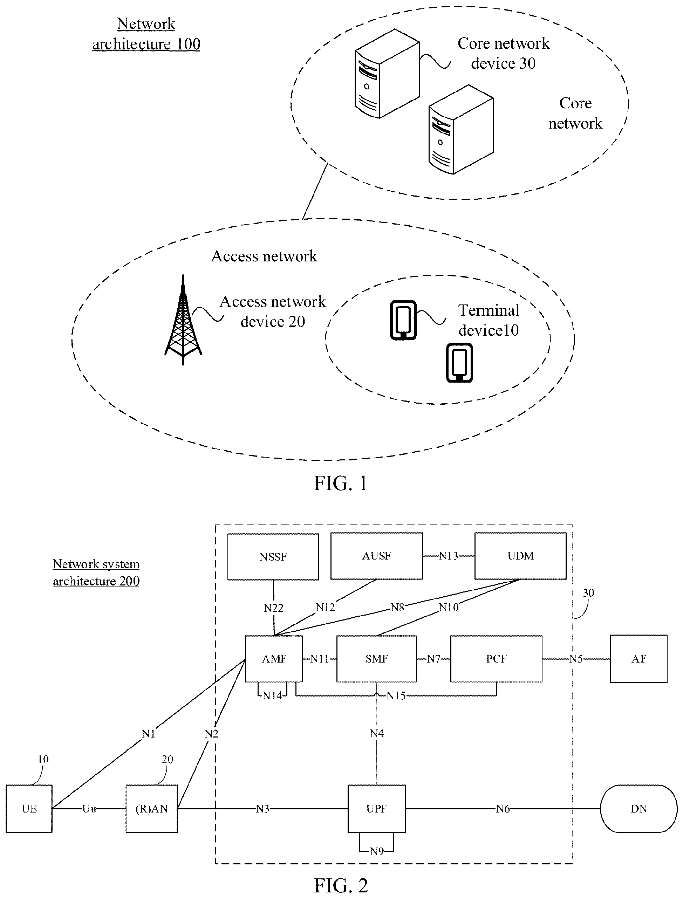

FIG. 1 is a schematic diagram of a network architecture 100 according to an example embodiment of this application. The network architecture 100 includes a terminal device 10, an access network device 20, and a core network device 30.

The terminal device 10 may refer to user equipment (User Equipment, UE), an access terminal, a subscriber unit, a subscriber station, a mobile station, a mobile console, a remote station, a remote terminal, a mobile device, a wireless communications device, a user agent, or a user apparatus. Optionally, the terminal device 10 may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device or any other processing device connected to a wireless modem, a vehicle-mounted device, a wearable device, a terminal device in a 5th generation system (5th Generation System, 5GS) or a terminal device in a future evolved public land mobile network (Public Land Mobile Network, PLMN), or the like, which is not limited in embodiments of this application. For ease of description, the devices mentioned above are collectively referred to as a terminal device. There are generally a plurality of terminal devices 10. One or more terminal devices 10 may be distributed within each cell managed by the access network device 20.

The access network device 20 is a device that is deployed in an access network and that is configured to provide the terminal device 10 with a wireless communication function. The access network device 20 may include various forms of macro base stations, micro base stations, relay nodes, access points, and the like. In systems using different radio access technologies, a device having a function of an access network device may have a different name, for example, referred to as a next generation node B (gNodeB, gNB) in a 5th generation new radio (5th Generation New Radio, 5G NR) system. As communications technologies evolve, the name "access network device" may change. For ease of description, in embodiments of this application, apparatuses mentioned above that provide the terminal device 10 with a wireless communication function are collectively referred to as an access network device. Optionally, a communication relationship may be established between the terminal device 10 and the core network device 30 through the access network device 20. For example, in a long term evolution (Long Term Evolution, LTE) system, the access network device 20 may be one or more evolved base stations in an evolved universal terrestrial radio access network (Evolved Universal Terrestrial Radio Access Network, EUTRAN) or EUTRAN. In the 5G NR system, the access network device 20 may be one or more gNBs in a radio access network (Radio Access Network, RAN) or RAN. In embodiments of this application, unless otherwise specified, a network device refers to the access network device 20, such as a base station.

The core network device 30 is a device deployed in a core network. Main functions of the core network device 30 include providing user connectivity, managing users, and bearing services. The core network device also serves as a bearer network to provide an interface to external networks. For example, in the 5G NR system, a core network device includes network elements such as an access and mobility management function (Access and Mobility Management Function, AMF) network element, a user plane function (User Plane Function, UPF) network element, and a session management function (Session Management Function, SMF) network element.

In some embodiments, the access network device 20 and the core network device 30 communicate with each other by using an air interface technology, such as an NG interface in the 5G NR system. The access network device 20 and the terminal device 10 communicate with each other by using an air interface technology, such as a Uu interface.

FIG. 2 is a schematic diagram of a network system architecture 200 according to an example embodiment of this application. The network system architecture 200 includes a terminal device 10, an access network device 20, and a core network device 30.

The core network device 30 includes at least one of the following: a location management function (Location Management Function, LMF), a network slice selection function (Network Slice Selection Function, NSSF), an authentication server function (Authentication Server Function, AUSF), a unified data management (Unified Data Management, UDM) function, an AMF, an SMF, a policy control function (Policy Control Function, PCF), a UPF, a sensing function (Sensing Function, SF), or a network data analytics function (Network Data Analytics Function, NWDAF).

UE implements an access stratum connection, exchanges access stratum messages, and performs wireless data transmission with an access network (Access Network, AN) by using a Uu interface, and the UE implements a non-access stratum (None Access Stratum, NAS) connection and exchanges NAS messages with an AMF by using an N1 interface. The AMF is a mobility management function in a core network, and the SMF is a session management function in the core network. In addition to performing mobility management on the UE, the AMF is also responsible for forwarding a message related to session management between the UE and the SMF. The PCF is a policy management function in the core network, and is responsible for formulating policies related to mobility management, session management, charging, and the like of the UE. The PCF performs data transmission with an external application function (Application Function, AF) by using an N5 interface. The UPF is a user plane function in the core network, and performs data transmission with an external data network (Data Network, DN) by using an N6 interface and performs data transmission with the AN by using an N3 interface.

In embodiments of this application, the term "5G NR system" may also be referred to as a 5G system or an NR system, and those skilled in the art may understand its meaning. The technical solutions described in embodiments of this application may be applicable to an LTE system, a 5G NR system, a subsequent evolved system of the 5G NR system, or another communications systems such as a narrow band Internet of things (Narrow Band Internet of Things, NB-IoT) system, which is not limited in embodiments of this application.

The first device or the second device involved in embodiments of this application includes at least one of the following scenarios:

Scenario 1: the first device is a terminal device, and the second device is a network device;
Scenario 2: the first device is a network device, and the second device is a terminal device;
Scenario 3: both the first device and the second device are terminal devices; or
Scenario 4: both the first device and the second device are network devices.

The network device is an access network device, or a core network device, or an AI/ML model life cycle management device, or an operation administration and maintenance (Operation Administration and Maintenance, OAM) device.

The access network device includes at least one of the following:
a gNB, a centralized unit (Centralized Unit, CU), a distributed unit (Distributed Unit, DU), a centralized unit-control plane (Centralized Unit-Control Plane, CU-CP), or a centralized unit-user plane (Centralized Unit-User Plane, CU-UP).

The core network device includes at least one of the following:
an LMF network element, an NSSF network element, an AMF network element, an AUSF network element, a UPF network element, an SMF network element, a PCF network element, a UDM network element, an SF network element, or an NWDAF network element.

With continuous development of the AI/ML technology, integration of communication technologies with the AI/ML technology becomes one of trends in future communication. To cope with complexity and diversity of scenarios of communications systems, an AI/ML model is introduced in a communications system. During the use of the AI/ML model, a terminal device is required to monitor the AI/ML model. When the terminal device monitors the AI/ML model, the network device is also required to perform a corresponding operation. For example, in monitoring processes of some AI/ML models, the network device is required to transmit a reference signal associated with model monitoring in a corresponding monitoring time window. If the terminal device and the network device fail to maintain a consistent understanding of model monitoring order, the reference signal associated with model monitoring may not be transmitted in an actual monitoring time window, or may be transmitted outside a monitoring time window corresponding to the AI/ML model, resulting in failing to monitor the corresponding AI/ML model. For another example, to prevent AI/ML models that interfere with each other from simultaneously operating during monitoring, the terminal device and the network device are also required to maintain a consistent understanding of monitoring order of the AI/ML models, so as to learn when to accurately suspend operation of some AI/ML models that affect monitoring processes of other AI/ML models. Otherwise, AI/ML models that interfere with each other may simultaneously operate during monitoring, restulting in that AI/ML model monitoring results cannot reflect a real situation.

To avoid the foregoing situation in which performance monitoring results of the AI/ML models are affected, it is required to consider how to enable the terminal device and the network device to maintain a consistent understanding of model monitoring order in a model monitoring scenario involving a plurality of models, so as to obtain a true and effective model performance monitoring result.

It should be noted that, in embodiments of this application, meanings of monitoring, model monitoring, model performance monitoring, and performance monitoring may be equivalent and these terms may be used interchangeably. For ease of description, the term "model monitoring" is used throughout the following description.

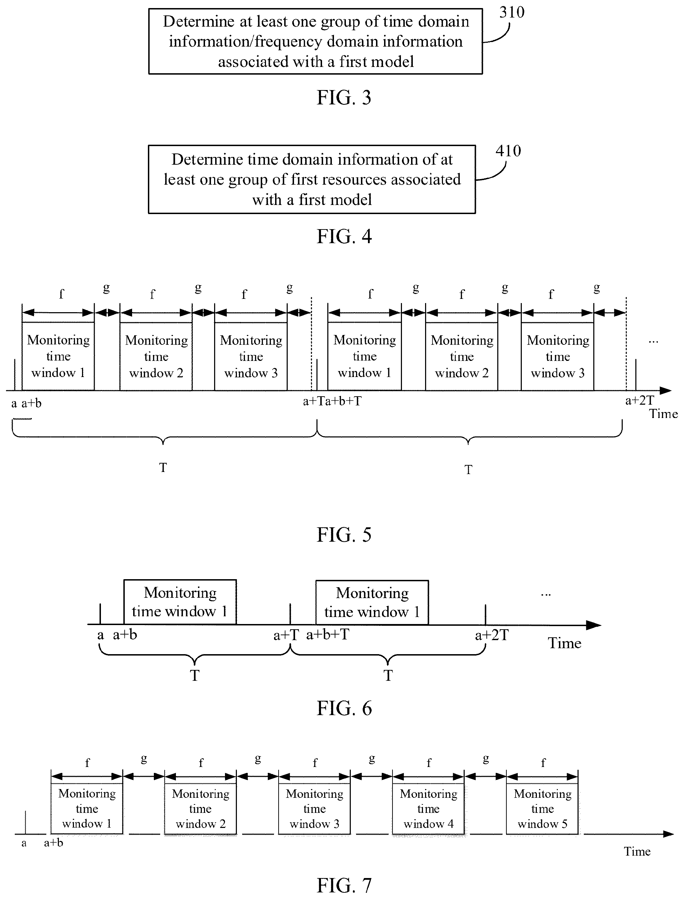

FIG. 3 is a flowchart of an information determining method according to an example embodiment of this application. The method is executed by a first device, and the method includes the following step 310.

In **step 310,** at least one group of time domain information/frequency domain information associated with a first model is determined.

The first model is an AI model or an ML model, and at least one of the time domain information or frequency domain information is associated with a model monitoring process of the first model.

In some embodiments, one or more to-be-monitored models operate in the first device, the first model includes all, or some, or one of the one or more to-be-monitored models. Optionally, each to-be-monitored model is an AI/ML model related to mobile communications, such as a channel state information (Channel-State Information, CSI) compression feedback model, a beam prediction model, a positioning model, or a mobility control model.

In some embodiments, the time domain information is time domain information, used to monitor the first model, of at least one group of first resources; and the frequency domain information is frequency domain information, used to monitor the first model, of at least one group of first resources. In some embodiments, each first resource includes a segment of time domain resource and/or a segment of frequency domain resource. At least one of the time domain information or frequency domain information of the at least one group of first resources includes all or a part of a monitoring resource (for a specific definition, reference is made to the description of the first information), and the monitoring resource is a periodic monitoring resource or an aperiodic monitoring resource.

In some embodiments, the first device determines the time domain information of the at least one group of first resources associated with the first model. The first resources are associated with a model monitoring process of the first model. In some embodiments, the first resource is a time-frequency resource or an air interface resource used to monitor the first model. Alternatively, the first resource is a time-frequency resource or an air interface resource used to monitor performance of the first model.

In some embodiments, in a case in which at least one group of time domain information associated with the first model is a plurality of groups of time domain information, the plurality of groups of time domain information meet at least one of the following conditions:

at least two groups of time domain information in a plurality of groups of time domain information associated with a same model do not overlap or partially overlap in time domain; or

at least two groups of time domain information in different time domain information associated with different models do not overlap or partially overlap in time domain.

In some embodiments, the first device determines at least one group of frequency domain information associated with the first model, and frequency domain information associated with different first models may be entirely the same; or may be entirely different; or may be partially the same and partially different. This is not limited in embodiments of this application. In some embodiments, the first device determines frequency domain information of at least one first resource associated with the first model.

In some embodiments, the time domain information includes at least one of the following information:

time domain start location information;
time domain end location information; or

time domain length information.

In conclusion, according to the method provided in this embodiment, at least one group of time domain information associated with the first model is determined, where the first model is an AI model or an ML model, and the time domain information is associated with the model monitoring process of the first model, so that different time domain information associated with different models can be determined, and model monitoring is performed on different models by using different time domain information.

FIG. 4 is a flowchart of an information determining method according to an example embodiment of this application. The method is executed by a first device, and the method includes the following step 410.

In **step 410,** time domain information of at least one group of first resources associated with a first model is determined.

The first resources are associated with a model monitoring process of the first model. In some embodiments, the first resource is a time-frequency resource or an air interface resource used to monitor the first model. Alternatively, the first resource is a time-frequency resource or an air interface resource used to monitor performance of the first model.

In some embodiments, the time domain information is time domain information, used to monitor the first model, of at least one first resource; and the frequency domain information is frequency domain information, used to monitor the first model, of at least one first resource. In some embodiments, each first resource includes a segment of time domain resource and/or a segment of frequency domain resource. At least one of the time domain information or frequency domain information of the at least one group of first resources includes all or a part of a monitoring resource (for a specific definition, reference is made to the description of the first information), and the monitoring resource is a periodic monitoring resource or an aperiodic monitoring resource.

In some embodiments, the time domain information of the first resources is represented by absolute time, for example, coordinated universal time (Coordinated Universal Time, UTC).

For example, a time domain start location of the first resources is 00:00:00 on March 29, 2023, and a time domain end location of the first resources is 00:00: 10 on March 29, 2023.

In some embodiments, the time domain information of the first resources is represented by a time domain unit.

The time domain unit includes at least one of a hyper frame number, a system frame number, a subframe group number, a subframe number, a slot group number, a slot number, a symbol group number, or a symbol number. A hyper frame number indicates which round of resources a system frame (System Frame Number, SFN) A belongs to. For example, one round of system frame resources includes 1024 system frames, and the hyper frame number indicates which round of 1024 system frame resources a current system frame SFN A belongs to. Subframes included in 1024 system frames or in one system frame may be classified into a plurality of groups, and a number of each group of subframes is referred to as a subframe group number. Slots included in one system frame, or in a first half-frame of one system frame, or in a second half-frame of one system frame, or in a subframe in one system frame, may be classified into a plurality of groups, and a number of each group of slots is referred to as a slot group number. Symbols included in one system frame, or in a first half-frame of one system frame, or in a second half-frame of one system frame, or in a subframe in one system frame, or in one slot, may be classified into a plurality of groups, and a number of each group of symbols is referred to as a symbol group number. In this application, meanings of a system frame and a radio frame are not distinguished.

For example, a time domain start location of the first resources is a $1^{st}$ slot in a $1^{st}$ radio frame, and a time domain end location of the first resources is a $3^{rd}$ slot in a $1^{st}$ radio frame.

In some embodiments, the process of determining, by the first device, the time domain information of the at least one group of first resources associated with the first model includes at least one of the following solutions:

Solution 1: The first device determines, based on first information, the time domain information of the at least one group of first resources associated with the first model;
Solution 2: The first device determines, based on numbering information associated with the first model, the time domain information of the at least one group of first resources associated with the first model; or
Solution 3: The first device determines, based on first information and numbering information associated with the first model, the time domain information of the at least one group of first resources associated with the first model.

The first information is associated with the model monitoring process of the first model, or the first information may be used in the model monitoring process of the first model.

In some embodiments, the first model includes all or some or one of to-be-monitored models, the first information includes monitoring resource configuration information, and the first information includes at least one of the following information:

Information 1: a time domain start location of a monitoring resource,
where the monitoring resource is a resource used to monitor performance of an AI/ML model, for example, a time-frequency resource or an air interface resource; and the monitoring resource may be classified into an aperiodic monitoring resource and a periodic monitoring resource according to a resource occurrence type;

Information 2: a time domain end location of a monitoring resource;

Information 3: a first time offset;

Information 4: a total quantity of monitoring time windows included in an aperiodic monitoring resource;

Information 5: a window length corresponding to a single monitoring time window;

Information 6: an interval between adjacent monitoring time windows;

Information 7: a resource repetition period corresponding to a periodic monitoring resource;

Information 8: a second time offset;

Information 9: a total quantity of monitoring time windows included in a single resource repetition period within a periodic monitoring resource; or

Information 10: a total quantity of resource repetition periods corresponding to the periodic monitoring resource.

The first time offset is a time offset between a time domain start location of the aperiodic monitoring resource and a time domain start location of a $1^{st}$ monitoring time window corresponding to the aperiodic monitoring resource; the second time offset is a time offset between a time domain start location of a $1^{st}$ monitoring time window in any resource repetition period within the periodic monitoring resource and a time domain start location of a latest single resource repetition period within the periodic monitoring resource; and time domain resources corresponding to the time domain information of the at least one group of first resources are included in the monitoring resource or are a part of the monitoring resource.

The first device acquires the first information through at least one of a dedicated signalling procedure, a pre-configuration procedure, a predefinition procedure, a (system) broadcast message procedure, or a multicast message procedure. For example, the first device receives first information transmitted by a second device. Certainly, it should be further noted that, if the first information includes a plurality of pieces of sub-information (that is, including at least two pieces of information in the information 1 to the information 10 mentioned above), it is allowed that a part of sub-information included in the first information is obtained in one of the foregoing manners, while another part of sub-information included in the first information is obtained in another one of the foregoing manners. For example, the information 1 is acquired through the dedicated signalling procedure, the information 3 is acquired in a predefined manner, and the information 5 is acquired through the system broadcast message procedure. Certainly, there are still many combinations of sub-information acquisition manners, which are not listed one by one herein.

In some embodiments, the first device transmits the first information to the second device. For example, a network device transmits the first information to a terminal device. In some embodiments, the first device receives the first information transmitted by the second device. For example, a terminal device receives the first information transmitted by a network device.

In some embodiments, at least two first models are associated with a same set of first information.

In an example, there are a first model A and a first model B, and both the first model A and the first model B are associated with first information A. In other words, the second device configures the first information A for the first device, and the first information A includes at least one group of first resources associated with the first model A and at least one group of first resources associated with the first model B. The first model A and the first model B share a same set of monitoring resource configuration information.

In some embodiments, each of the first models is associated with respective first information.

For example, there are a first model A and a first model B, the first model A is associated with first information A, and the first model B is associated with first information B. In other words, the second device configures the first information A and the first information B for the first device, the first information A is used to configure at least one group of first resources associated with the first model A, the first information B is used to configure at least one group of first resources associated with the first model B, and the first model A and the first model B use different monitoring resources configuration information.

The first information includes at least one of the following four monitoring resource configuration schemes:

**Monitoring resource configuration scheme 1:** The first information is used to configure a periodic monitoring resource, and any resource repetition period within the periodic monitoring resource includes a plurality of monitoring time windows. FIG. 5 is a schematic diagram of a resource configuration scheme according to an example embodiment of this application.

In the resource configuration scheme 1, the first information includes at least one of the following information:

Information 1: a time domain start location of a monitoring resource,

Information 2: a time domain end location of a monitoring resource;

Information 5: a window length of a single monitoring time window;

Information 6: an interval between adjacent monitoring time windows;

Information 7: a resource repetition period corresponding to a periodic monitoring resource;

Information 8: a second time offset;

Information 9: a total quantity of monitoring time windows included in a single resource repetition period within a periodic monitoring resource; or

Information 10: a total quantity of resource repetition periods corresponding to the periodic monitoring resource.

The second time offset is a time offset between a time domain start location of a 1$^{st}$ monitoring time window in any resource repetition period within the periodic monitoring resource and a time domain start location of a latest single resource repetition period within the periodic monitoring resource; and time domain resources corresponding to the time domain information of the at least one group of first resources are included in the monitoring resource or are a part of the monitoring resource.

The foregoing information is described with reference to FIG. 5.

The information 1 corresponds to an instant a, an instant (a+T), or the like, where a value of a is greater than or equal to 0.

The information 2 is used to constrain the time domain end location of the periodic monitoring resource.

The information 5 corresponds to a parameter f, where a value of f is greater than 0.

The information 6 corresponds to a parameter g, where a value of g is greater than or equal to 0.

Optionally, if the information 6 is defined in a protocol but a configuration corresponding to the information 6 is not provided in a configuration procedure, the first device (a configuration receiver) uses stored information 6 configured in a previous configuration procedure, or sets a value of the information 6 to 0 by default. If the information 6 is not defined in a protocol, it is assumed by default in the protocol that an interval between any two adjacent monitoring time windows in a periodic monitoring resource period is 0, that is, the adjacent monitoring time windows are contiguously distributed in time domain.

The information 7 corresponds to a parameter T, indicating that a same monitoring resource repeats once at an interval of T.

The information 8 corresponds to a parameter b, where a value of b is greater than or equal to 0.

The information 9 indicates information about a total quantity of monitoring time windows included in a single resource repetition period. FIG. 5 is used as an example. Each resource repetition period includes three monitoring time windows: a monitoring time window 1, a monitoring time window 2, and a monitoring time window 3.

A function of the information 10 is similar to that of the information 2, and both the information 10 and the information 2 may constrain the time domain end location of the monitoring resource. The information 10 indirectly indicates the time domain end location of the monitoring resource by constraining a quantity of periods of periodic monitoring resources.

**Monitoring resource configuration scheme 2:** The first information is used to configure a periodic monitoring resource, and any resource repetition period within the periodic monitoring resource includes one monitoring time window. FIG. 6 is a schematic diagram of a monitoring resource configuration scheme according to an example embodiment of this application.

In the monitoring resource configuration scheme 2, the first information includes at least one of the following information:

Information 1: a time domain start location of a monitoring resource;

Information 2: a time domain end location of a monitoring resource;

Information 5: a window length of a single monitoring time window;

Information 7: a resource repetition period corresponding to a periodic monitoring resource;

Information 8: a second time offset;

Information 10: a total quantity of resource repetition periods corresponding to the periodic monitoring resource.

The second time offset is a time offset between a time domain start location of a 1$^{st}$ monitoring time window in any resource repetition period within the periodic monitoring resource and a time domain start location of a latest single resource repetition period within the periodic monitoring resource; and time domain resources corresponding to the time domain information of the at least one group of first resources are included in the monitoring resource or are a part of the monitoring resource.

The foregoing information is described with reference to FIG. 6.

The information 1 corresponds to an instant a, an instant (a+T), or the like, where a value of a is greater than or equal to 0.

The information 2 is used to constrain the time domain end location of the periodic monitoring resource.

The information 5 corresponds to a parameter f, where a value of f is greater than 0.

The information 7 corresponds to a parameter T, indicating that a same monitoring resource repeats once at an interval of T.

The information 8 corresponds to a parameter b, where a value of b is greater than or equal to 0.

A function of the information 10 is similar to that of the information 2, and both the information 10 and the information 2 may constrain the time domain end location of the monitoring resource. The information 10 indirectly indicates the time domain end location of the monitoring resource by constraining a quantity of periods of periodic monitoring resources.

**Monitoring resource configuration scheme 3:** The first information is used to configure an aperiodic monitoring resource, and any aperiodic monitoring resource includes a plurality of monitoring time windows. FIG. 7 is a schematic diagram of a monitoring resource configuration scheme according to an example embodiment of this application.

In the monitoring resource configuration scheme 3, the first information includes at least one of the following information:

Information 1: a time domain start location of a monitoring resource,

Information 2: a time domain end location of a monitoring resource;

Information 3: a first time offset;

Information 4: a total quantity of monitoring time windows included in an aperiodic monitoring resource;

Information 5: a window length of a single monitoring time window; or

Information 6: an interval between adjacent monitoring time windows.

The first time offset is a time offset between a time domain start location of the aperiodic monitoring resource and a time domain start location of a $1^{st}$ monitoring time window corresponding to the aperiodic monitoring resource; and time domain resources corresponding to the time domain information of the at least one group of first resources are included in the monitoring resource or are a part of the monitoring resource.

The foregoing information is described with reference to FIG. 7.

The information 1 corresponds to an instant a, where a value of a is greater than or equal to 0.

The information 2 is used to constrain the time domain end location of the monitoring resource.

The information 3 corresponds to a value of a parameter b, where a value of b is greater than or equal to 0.

Optionally, if the information 3 is defined in a protocol but a configuration corresponding to the information 3 is not provided in a configuration procedure, the first device (a configuration receiver) uses stored information 3 configured in a previous configuration procedure, or sets a value of the information 3 to 0 by default. If the information 3 is not defined in a protocol, it is assumed by default in the protocol that a time offset between a time domain start location of the aperiodic monitoring resource and a time domain start location of a $1^{st}$ monitoring time window corresponding to the aperiodic monitoring resource is 0, that is, both of the time domain start locations correspond to a same time domain location.

The information 4 corresponds to a total quantity of monitoring time windows. For example, if there are a monitoring time window 1 to a monitoring time window 5 in FIG. 7, a value of the information 4 is 5.

The information 5 corresponds to a parameter f, where a value of f is greater than 0.

The information 6 corresponds to a parameter g, where a value of g is greater than or equal to 0.

Optionally, if the information 6 is defined in a protocol but a configuration corresponding to the information 6 is not provided in a configuration procedure, the first device (a configuration receiver) uses stored information 6 configured in a previous configuration procedure, or sets a value of the information 6 to 0 by default. If the information 6 is not defined in a protocol, it is assumed by default in the protocol that an interval between any two adjacent monitoring time windows is 0, that is, the adjacent monitoring time windows are contiguously distributed in time domain.

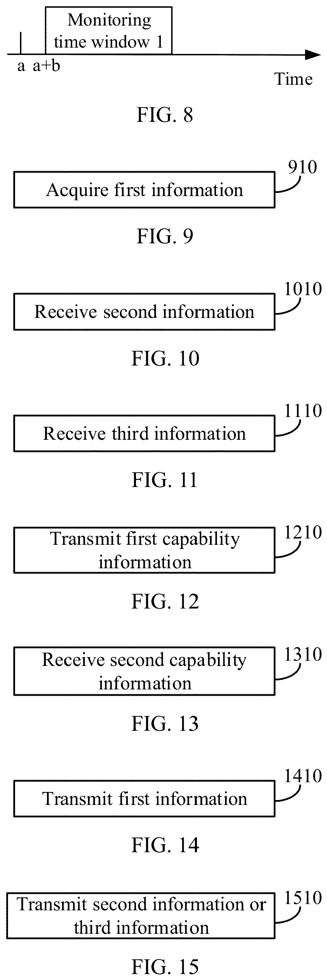

**Monitoring resource configuration scheme 4:** The first information is used to configure an aperiodic monitoring resource, and any aperiodic monitoring resource includes one monitoring time window. FIG. 8 is a schematic diagram of a monitoring resource configuration scheme according to an example embodiment of this application.

In the monitoring resource configuration scheme 4, the first information includes at least one of the following information:

Information 1: a time domain start location of a monitoring resource,

Information 2: a time domain end location of a monitoring resource;

Information 3: a first time offset; or

Information 5: a window length of a single monitoring time window.

The first time offset is a time offset between a time domain start location of the aperiodic monitoring resource and a time domain start location of a $1^{st}$ monitoring time window corresponding to the aperiodic monitoring resource; and time domain resources corresponding to the time domain information of the at least one group of first resources are included in the monitoring resource or are a part of the monitoring resource.

The foregoing information is described with reference to FIG. 8.

The information 1 corresponds to an instant a, where a value of a is greater than or equal to 0.

The information 2 is used to constrain the time domain end location of the monitoring resource.

The information 3 corresponds to a value of a parameter b, where a value of b is greater than or equal to 0.

Optionally, if the information 3 is defined in a protocol but a configuration corresponding to the information 3 is not provided in a configuration procedure, the first device (a configuration receiver) uses stored information 3 configured in a previous configuration procedure, or sets a value of the information 3 to 0 by default. If the information 3 is not defined in a protocol, it is assumed by default in the protocol that a time offset between a time domain start location of the aperiodic monitoring resource and a time domain start location of a 1$^{st}$ monitoring time window corresponding to the aperiodic monitoring resource is 0, that is, both of the time domain start locations correspond to a same time domain location.

The information 5 corresponds to a parameter f, where a value of f is greater than 0.

At least one of the time domain start location information or the time domain end location information of the at least one group of first resources associated with the first model is determined based on the foregoing four monitoring resource configuration schemes and the numbering information associated with the first model, which includes at least one of the following four cases.

**Case 1:** At least one of the time domain start location information or the time domain end location information of the at least one group of first resources associated with the first model is determined based on the first information (corresponding to the monitoring resource configuration scheme 1) and the numbering information associated with the first model.

In some embodiments, the first model is a plurality of models, the first model includes a target model, and the target model is one of the plurality of first models.

In some embodiments, sequence number information of at least one monitoring time window associated with the target model is determined based on the numbering information associated with the target model.

Optionally, the numbeingr information associated with the target model is logical numbering information uniquely identifying the target model from a plurality of models. For example, the plurality of models are three models, and the logical numbering information is 0, 1, and 2.

Optionally, the sequence number information of the monitoring time window may be considered as numbering information obtained by sequentially numbering a plurality of monitoring time windows that belong to a same monitoring resource. For example, if one resource period of the periodic monitoring resource includes nine monitoring time windows, the sequence number information is 0, 1, 2, 3, 4, 5, 6, 7, and 8.

In some embodiments, sequence number information of at least one monitoring time window associated with the target model is determined based on a fifth reminder and the numbering information associated with the target model.

The fifth reminder is a value obtained by performig a modulo operation on a total quantity of first models and a sequence number associated with any monitoring time window in the at least one monitoring time window, and the fifth reminder is the same as the numbering information associated with the target model.

The numbering information associated with the target model is associated with one or more monitoring time windows included in the periodic monitoring resource, and an association relationship is determined according to the following formula:

$$c = d \bmod n$$

In which, c denotes the numbering information associated with the target model, d denotes a sequence number associated with any monitoring time window included in the monitoring resource, n denotes a total quantity of models or a total quantity of models involved in monitoring resource allocation, and mod denotes a modulo operator.

For example, there are three first models (that is, n = 3), and values of model identifiers thereof are sequentially '10', '15', and '20'. One resource repetition period of the periodic monitoring resource includes nine monitoring time windows, with sequence numbers being sequentially 0, 1, 2, 3, 4, 5, 6, 7, and 8. In addition, based on any one of methods for acquiring the numbering information associated with the first model introduced below, the numbering information associated with the three first models is determined sequentially to be 0, 1, and 2, that is, values of c are sequentially 0, 1, and 2.

According to the above formula, sequence numbers (that is, values of d) associated with monitoring time windows that are associated with the first model corresponding to the model identifier '10' are 0, 3, and 6; sequence numbers associated with monitoring time windows that are associated with the first model corresponding to the model identifier '15' are 1, 4, and 7; and sequence numbers associated with monitoring time windows that are associated with the first model corresponding to the model identifier '20' are 2, 5, and 8. The above method is used in each resource repetition period of the periodic monitoring resource to determine the sequence number information of at least one monitoring time window associated with the target model.

(1) Absolute time, such as UTC, is used to represent the time domain start location information and/or the time domain end location information of the at least one group of first resources associated with the first model.

The first model includes a target model, and the time domain information of the at least one group of first resources associated with the target model is determined based on at least one of the following information:

a first sum, where the first sum is a sum of the time domain start location (represented by a parameter a) of the monitoring resource and a second time offset (represented by a parameter b);

a second sum, where the second sum is a sum of the window length (represented by a parameter f) of a single monitoring time window and an interval (represented by a parameter g) between adjacent monitoring time windows;

a first difference, where the first difference is a difference between a sequence number corresponding to an $e^{th}$ group of first resources associated with the target model and a first value;

a second difference, where the second difference is a difference between a sequence number corresponding to a $q^{th}$ resource repetition period within the periodic monitoring resource and the first value;

a first product, where the first product is a product of the first difference, the second sum, and a total quantity of first models;

a second product, where the second product is a product of numbering information associated with the target model and the second sum;

a third product, where the third product is a product of the second difference and a resource repetition period corresponding to the periodic monitoring resource; or

a third sum, where the third sum is a sum of the first sum, the first product, the second product, and the third product.

The second time offset is a time offset between a time domain start location of a $1^{st}$ monitoring time window in any resource repetition period within the periodic monitoring resource and a time domain start location of a latest single resource repetition period within the periodic monitoring resource, where both e and q are positive integers. Description is provided using an example in which the first value is 1.

A time domain start location t1 of the at least one group of first resources associated with the target model includes the third sum, and may be expressed by the following formula:

$$t1 = (a{+}b) + (e{-}1) \times n \times (f{+}g) + c \times (f{+}g) + (q{-}1) \times T$$

A time domain end location t2 of the at least one group of first resources associated with the target model includes a sum of the third sum and the window length of a single monitoring time window, and may be expressed by the following formula:

$$t2 = (a{+}b) + (e{-}1) \times n \times (f{+}g) + c \times (f{+}g) + f + (q{-}1) \times T$$

In which, a denotes the time domain start location of the monitoring resource; b denotes the second time offset; e denotes a sequence number of a monitoring time window (that is, a group sequence number of first resources) associated with the same target model in chronological order, for example, if sequence numbers of monitoring time windows associated with the target model are sequentially 2, 5, and 8, then values of e are sequentially 1, 2, and 3; n denotes the total quantity of models or a total quantity of models involving in monitoring resource allocation; f denotes the window length of a single monitoring time window; g denotes the interval between adjacent monitoring time windows; c denotes the numbering information associated with the target model; q denotes a sequence number corresponding to the $q^{th}$ resource repetition period; and T denotes the resource repetition period corresponding to the periodic monitoring resource.

Each fixed value of c corresponds to one target model, for example, a value 0 of c corresponds to a model A. For each fixed value of q (values of q are sequentially 1, 2, 3, ..., to indicate resource allocation of monitoring time windows included within the $q^{th}$ resource repetition period), depending on variation in values of e (values of e are sequentially 1, 2, 3, ...), a time domain start location of each group of first resources (in the case of the monitoring resource configuration scheme 1, each group of first resources corresponds to one monitoring time window) associated with the model A within the $q^{th}$ resource repetition period and/or a time domain end location of each group of first resources associated with the model A within the $q^{th}$ resource repetition period may be sequentially obtained.

Time domain locations corresponding to t1 and t2 should not exceed constraints on the time domain end location of the monitoring resource (corresponding to the information 2) and/or the total quantity of resource repetition periods corresponding to the periodic monitoring resource (corresponding to the information 10).

For example, in FIG. 5, a = 0, b = 0, n = 3, f = 2, g = 1, and T = 10.

A value 0 of c corresponds to a model A, a first group of first resources associated with the model A corresponds to a monitoring time window 1, and t1 and t2 of the first group of first resources associated with the model A are respectively as follows: $t1 = 0 + 0 + (1\text{-}1) \times 3 \times (2+1) + 0 \times (2+1) + (1\text{-}1) \times 10 = 0$ and $t2 = 0 + 0 + (1\text{-}1) \times 3 \times (2+1) + 0 \times (2+1) + 2 + (1\text{-}1) \times 10 = 2$.

A value 1 of c corresponds to a model B, a first group of first resources associated with the model B corresponds to a monitoring time window 2, and t1 and t2 of the first group of first resources associated with the model B are respectively as follows: $t1 = 0 + 0 + (1\text{-}1) \times 3 \times (2+1) + 1 \times (2+1) + (1\text{-}1) \times 10 = 3$ and $t2 = 0 + 0 + (1\text{-}1) \times 3 \times (2+1) + 1 \times (2+1) + 2 + (1\text{-}1) \times 10 = 5$.

A value 2 of c corresponds to a model C, a first group of first resources associated with the model C corresponds to a monitoring time window 3, and t1 and t2 of the first group of first resources associated with the model C are respectively as follows: $t1 = 0 + 0 + (1\text{-}1) \times 3 \times (2+1) + 2 \times (2+1) + (1\text{-}1) \times 10 = 6$ and $t2 = 0 + 0 + (1\text{-}1) \times 3 \times (2+1) + 2 \times (2+1) + 2 + (1\text{-}1) \times 10 = 8$.

(2) A time domain unit, such as a system frame number or a slot number value, is used to represent the time domain start location information and/or the time domain end location information of the at least one group of first resources associated with the first model.

The first model includes a target model, and the time domain start location of the at least one group of first resources associated with the target model is determined based on at least one of the following information:

a second sum, where the second sum is a sum of the window length (represented by a parameter f) of a single monitoring time window and an interval (represented by a parameter g) between adjacent monitoring time windows;

a second product, where the second product is a product of numbering information (represented by a parameter c) associated with the target model and the second sum, and the second product is denoted as z, where z is greater than or equal to 0;

a fourth sum, where the fourth sum is a sum of the second product and a first slot number value, and the first slot number value is denoted as k, where k is a positive integer;

a second slot number value (represented by a parameter h), where the second slot number value is a value obtained by performing a modulo operation on the fourth sum and a total quantity (represented by a parameter M, where there is certainly a correspondence between a value of M and a subcarrier spacing parameter) of slots included in each radio frame;

a first quotient, where the first quotient is a quotient obtained by dividing the second product by a total quantity of slots included in each radio frame;

a first integer value, where the first integer value is a floor operation value of the first quotient;

a third difference, where the third difference is a difference between a first radio frame number and a first parameter (represented by a parameter p), and the first radio frame number is denoted as SFN; or

a first remainder, where the first remainder is a value obtained by performing a modulo operation on the third difference and an occurrence period (represented by a parameter T1) of the first resources associated with the target model.

The first slot number value represents a number value of a slot in a radio frame corresponding to a time domain start location of a $1^{st}$ monitoring time window in either any resource repetition period within the periodic monitoring resource or the aperiodic monitoring resource; the first radio frame number represents a number of a radio frame to which a time domain start location of the at least one group of first resources associated with the target model belongs; and the first parameter represents a number value of a radio frame to which a time domain start location of a $1^{st}$ monitoring time window in either any resource repetition period within the periodic monitoring resource or the aperiodic monitoring resource belongs, or represents a value obtained by performing a modulo operation on a number value of a radio frame to which a time domain start location of a $1^{st}$ monitoring time window in any resource repetition period within the periodic monitoring resource belongs and a resource repetition period corresponding to the periodic monitoring resource.

Second slot number value $h = (z+k) \bmod M$.

The first radio frame number SFN is calculated according to the following formula:

$$(\text{SFN-}p) \bmod T1 = \text{FLOOR}(z/M), \text{ or}$$

$$(\text{SFN-}p+w) \bmod T1 = \text{FLOOR}(z/M)$$

T1 denotes the occurrence period of the first resources associated with the target model; values of occurrence periods of first resources associated with different models may be identical or different; M denotes the total quantity of slots included in each radio frame; mod denotes a modulo operation function; FLOOR denotes a floor operation function; a value of k is equal to a number of a slot in a radio frame corresponding to a time domain location at an instant (a+b) in FIG. 5; and a value of p is equal to a number value of a radio frame to which the time domain location at the instant (a+b) in FIG. 5 belongs, or a value of p is equal to a value obtained by performing a mod T operation on a number of a radio frame to which the time domain location at the instant (a+b) in FIG. 5 belongs, where w is a constant greater than or equal to 0, for example, w = 1024.

In an implementation, values of both a and b are 0. In this case, Parameter k = 0, and Parameter p = 0.

Values of h and SFN should not exceed constraints on the time domain end location of the monitoring resource (corresponding to the information 2) and/or the total quantity of resource repetition periods corresponding to the periodic monitoring resource (corresponding to the information 10).

The time domain start location of the at least one group of first resources associated with the target model includes time domain locations indicated by the first radio frame number and the second slot number value.

The first model includes a target model, and the time domain end location of the at least one group of first resources associated with the target model is determined based on at least one of the following information:

a second sum, where the second sum is a sum of the window length (represented by a parameter f) of a single monitoring time window and an interval (represented by a parameter g) between adjacent monitoring time windows;

a second product, where the second product is a product of numbering information (represented by a parameter c) associated with the target model and the second sum;

a fifth sum, where the fifth sum is a sum of the second product and the window length of a single monitoring time window, and the fifth sum is denoted as z, where z is greater than or equal to 0;

a sixth sum, where the sixth sum is a sum of the fifth sum and the first slot number value, and the first slot number value is denoted as k, where k is a positive integer;

a third slot number value (represented by a parameter h), where the third slot number value is a value obtained by performing a modulo operation on the sixth sum and a total quantity (represented by a parameter M) of slots included in each radio frame;

a second quotient, where the second quotient is a quotient obtained by dividing the fifth sum by a total quantity of slots included in each radio frame;

a second integer value, where the second integer value is a floor operation value of the second quotient;

a fourth difference, where the fourth difference is a difference between a second radio frame number and a first parameter (represented by a parameter p), and the second radio frame number is represented by SFN; or

a second remainder, where the second remainder is a value obtained by performing a modulo operation on the fourth difference and an occurrence period (represented by a parameter T1) of the first resources associated with the target model.

The first slot number value represents a number value of a slot in a radio frame corresponding to a time domain start location of a $1^{st}$ monitoring time window in either any resource repetition period within the periodic monitoring resource or the aperiodic monitoring resource; the second radio frame number represents a number of a radio frame to which a time domain start location of the at least one group of first resources associated with the target model belongs; and the first parameter represents a number value of a radio frame to which a time domain start location of a $1^{st}$ monitoring time window in either any resource repetition period within the periodic monitoring resource or the aperiodic monitoring resource belongs, or represents a value obtained by performing a modulo operation on a number value of a radio frame to which a time domain start location of a $1^{st}$ monitoring time window in any resource repetition period within the periodic monitoring resource belongs and a resource repetition period corresponding to the periodic monitoring resource.

Third slot number value h = (z+k) mod M.

The second radio frame number SFN is calculated according to the following formula:

$$(SFN-p) \bmod T1 = FLOOR(z/M),$$

or

$$(SFN-p+w) \bmod T1 = FLOOR(z/M)$$

T1 denotes the occurrence period of the first resources associated with the target model; values of occurrence periods of first resources associated with different models may be identical or different; M denotes the total quantity of slots included in each radio frame; mod denotes a modulo operation function; FLOOR denotes a floor operation function; a value of k is equal to a number of a slot in a radio frame corresponding to a time domain location at an instant (a+b) in FIG. 5; and a value of p is equal to a number value of a radio frame to which the time domain location at the instant (a+b) in FIG. 5 belongs, or a value of p is equal to a value obtained by performing a mod T operation on a number of a radio frame to which the time domain location at the instant (a+b) in FIG. 5 belongs, where w is a constant greater than or equal to 0, for example, w = 1024.

In an implementation, values of both a and b are 0. In this case, Parameter k = 0, and Parameter p = 0.

Values of h and SFN should not exceed constraints on the time domain end location of the monitoring resource (corresponding to the information 2) and/or the total quantity of resource repetition periods corresponding to the periodic monitoring resource (corresponding to the information 10).

A time domain end location of the at least one group of first resources associated with the target model includes time domain locations indicated by the second radio frame number and the third slot number value.

Optionally, T1 denotes a time difference between two adjacent first resources (or monitoring time windows) associated with one target model, and T1 is configured at a granularity of a model identifier, or a model identifier group, or a device.

The parameter T1 is determined in at least one of the following manners:

- ·a predefinition procedure;
- ·a pre-configuration procedure;
- ·a unicast dedicated signalling procedure;
- ·a multicast signalling procedure; or
- ·a broadcast signalling procedure (including the form of system broadcast messages).

Optionally, the parameter n is determined in at least one of the following manners:

- ·a pre-configuration procedure;
- ·a unicast dedicated signalling procedure;
- ·a multicast signalling procedure; or
- ·a broadcast signalling procedure (including the form of system broadcast messages).

**Case 2:** At least one of the time domain start location information or the time domain end location information of the at least one group of first resources associated with the first model is determined based on the first information (corresponding to the monitoring resource configuration scheme 2) and the numbering information associated with the first model.

The first model includes at least two first models, and the at least two first models include a target model.

(1) Absolute time, such as UTC, is used to represent the time domain start location information and/or the time domain end location information of the at least one group of first resources associated with the first model.

The first model includes a target model, and the time domain information of the at least one group of first resources associated with the target model is determined based on at least one of the following information:

a first sum, where the first sum is a sum of the time domain start location (represented by a parameter a) of the monitoring resource and a second time offset (represented by a parameter b);
a first difference, where the first difference is a difference between a sequence number corresponding to an $e^{th}$ group of first resources associated with the target model and a first value;
a second difference, where the second difference is a difference between a sequence number corresponding to a $q^{th}$ resource repetition period within the periodic monitoring resource and the first value;
a seventh sum, where the seventh sum is a sum of durations respectively for performing a single monitoring operation on first models, and is expressed as $\sum_{i=1}^{n} Li$ ;
a fourth product, where the fourth product is a product of the first difference and the seventh sum;
an eighth sum, where the eighth sum is a sum of durations respectively for performing a single monitoring operation on first models starting from a 1st (a resource allocation order of each first model is determined based on the numbering information associated with the first model) first model to the target model, and is expressed as $\sum_{i=0}^{c} Li$ ;
a third product, where the third product is a product of the second difference and a resource repetition period (represented by a parameter T) corresponding to the periodic monitoring resource; or
a ninth sum, where the ninth sum is a sum of the first sum, the fourth product, the eighth sum, and the third product.

The second time offset is a time offset between a time domain start location of a 1st monitoring time window in any resource repetition period within the periodic monitoring resource and a time domain start location of a latest single resource repetition period within the periodic monitoring resource, where both e and q are positive integers. Description is provided using an example in which the first value is 1.

A time domain start location t1 of the at least one group of first resources associated with the target model includes the ninth sum, and may be expressed by the following formula:

$$t1 = (a+b) + (e-1) \times \sum_{i=1}^{n} Li + \sum_{i=0}^{c} Li + (q-1) \times T$$

A time domain end location t2 of the at least one group of first resources associated with the target model includes a sum of the ninth sum and duration for performing a single monitoring operation on the target model, and may be expressed by the following formula:

$$t2 = (a+b) + (e-1) \times \sum_{i=1}^{n} Li + \sum_{i=0}^{c} Li + L_{(c+1)} + (q-1) \times T$$

In which, a denotes the time domain start location of the monitoring resource; b denotes the second time offset; e denotes a group sequence number of first resources associated with the same target model in chronological order, where values of e are sequentially 1, 2, and 3; n denotes the total quantity of models or a total quantity of models participating in monitoring resource allocation; c denotes the numbering information associated with the target model; $L_i$ denotes information about duration for performing a single monitoring operation on a model with the value of c equaling (i-1) (a value of i is 1, 2, ..., n); $L_{(c+1)}$ denotes information about duration for performing a single monitoring operation on the target model (for example, values of numbers respectively associated with models A, B, and C are sequentially 0, 1, and 2, and durations respectively for performing a single monitoring operation on the models are sequentially 5 ms, 10 ms, and 15 ms, then $L_1 = 5$, $L_2 = 10$, and $L_3 = 15$, with $L_0$ defined as 0); and T denotes the resource repetition period corresponding to the periodic monitoring resource.

Each fixed value of c corresponds to one target model, for example, a value 0 of c corresponds to a model A. For each fixed value of q (values of q are sequentially 1, 2, 3, ..., to indicate allocation of monitoring resources included within the $q^{th}$ resource repetition period), depending on variation in values of e (values of e are sequentially 1, 2, 3, ...), a time domain start location of each group of first resources associated with the model A within the $q^{th}$ resource repetition period and/or a time domain end location of each group of first resources associated with the model A within the $q^{th}$ resource repetition period may be sequentially obtained.

Time domain locations corresponding to t1 and t2 should not exceed constraints on the time domain end location of the monitoring resource (corresponding to the information 2) and/or the total quantity of resource repetition periods corresponding to the periodic monitoring resource (corresponding to the information 10).

For example, in FIG. 6, a = 0, b = 0, n = 3, a value 0 of c corresponds to the target model, T = 20, $L_1 = 5$, $L_2 = 3$, $L_3 = 2$, $L_0 = 0$, and time domain start locations t1 and t2 of the first group of first resources associated with the target model are respectively as follows: $t1 = 0 + 0 + (1-1) \times (5+3+2) + L_0 + (1-1) \times 20 = 0$ and $t2 = 0 + 0 + (1-1) \times (5+3+2) + L_0 + L_1 + (1-1) \times 20 = 5$.

(2) A time domain unit, such as a system frame number or a slot number value, is used to represent the time domain start location information and/or the time domain end location information of the at least one group of first resources associated with the first model.

The first model includes a target model, the time domain information of the at least one group of first resources associated with the target model is represented by a time domain unit, and the time domain information of the at least one group of first resources associated with the target model is determined based on at least one of the following information:

an eighth sum, where the eighth sum is a sum of durations respectively for performing a single monitoring operation on first models starting from a $1^{st}$ first model to the target model, and the eighth sum is expressed by $\sum_{i=0}^{c} Li$ and denoted as z, where z is greater than or equal to 0;

a tenth sum, where the tenth sum is a sum of the eighth sum and the first slot number value, and the first slot number value is denoted as k, where k is a positive integer;

a fourth slot number value (represented by a parameter h), where the fourth slot number value is a value obtained by performing a modulo operation on the tenth sum and a total quantity of slots included in each radio frame;

a third quotient, where the third quotient is a quotient obtained by dividing the eighth sum by a total quantity (represented by a parameter M) of slots included in each radio frame;

a third integer value, where the third integer value is a floor operation value of the third quotient;

a fifth difference, where the fifth difference is a difference between a third radio frame number and a first parameter (represented by a parameter p), and the third radio frame number is represented by SFN; or

a third remainder, where the third remainder is a value obtained by performing a modulo operation on the fifth difference and an occurrence period (represented by a parameter T1) of the first resources associated with the target model.

The first slot number value represents a number value of a slot in a radio frame corresponding to a time domain start location of a $1^{st}$ monitoring time window in either any resource repetition period within the periodic monitoring resource or the aperiodic monitoring resource; the third radio frame number represents a number of a radio frame to which a time domain start location of the at least one group of first resources associated with the target model belongs; and the first parameter represents a number value of a radio frame to which a time domain start location of a 1st monitoring time window in either any resource repetition period within the periodic monitoring resource or the aperiodic monitoring resource belongs, or represents a value obtained by performing a modulo operation on a number value of a radio frame to which a time domain start location of a 1st monitoring time window in any resource repetition period within the periodic monitoring resource belongs and a resource repetition period corresponding to the periodic monitoring resource.

Fourth slot number value $h = (z+k) \mod M$.

The third radio frame number SFN is calculated according to the following formula:

$$(SFN-p) \mod T1 = FLOOR(z/M),$$

or

$$(SFN-p+w) \mod T1 = FLOOR(z/M)$$

T1 denotes the occurrence period of the first resources associated with the target model; values of occurrence periods of first resources associated with different models may be identical or different; M denotes the total quantity of slots included in each radio frame; mod denotes a modulo operation function; FLOOR denotes a floor operation function; a value of k is equal to a number of a slot in a radio frame corresponding to a time domain location at an instant (a+b) in FIG. 6; and a value of p is equal to a number value of a radio frame to which the time domain location at the instant (a+b) in FIG. 6 belongs, or a value of p is equal to a value obtained by performing a mod T operation on a number of a radio frame to which the time domain location at the instant (a+b) in FIG. 6 belongs, where w is a constant greater than or equal to 0, for example, w = 1024.

In an implementation, values of both a and b are 0. In this case, Parameter k = 0, and Parameter p = 0.

Values of h and SFN should not exceed constraints on the time domain end location of the monitoring resource (corresponding to the information 2) and/or the total quantity of resource repetition periods corresponding to the periodic monitoring resource (corresponding to the information 10).

The time domain start location of the at least one group of first resources associated with the target model includes time domain locations indicated by the third radio frame number and the fourth slot number value.

The first model includes a target model, the time domain information of the at least one group of first resources associated with the target model is represented by a time domain unit, and the time domain information of the at least one group of first resources associated with the target model is determined based on at least one of the following information:

an eighth sum, where the eighth sum is a sum of durations respectively for performing a single monitoring operation on first models starting from a 1st first model to the target model, and the eighth sum is expressed by $\sum_{i=0}^{c} Li$;

an eleventh sum, where the eleventh sum is a sum of the eighth sum and duration (represented by a parameter $L_{(c+1)}$) for performing a single monitoring operation on the target model, and the eleventh sum is denoted as z, where z is greater than or equal to 0;

a twelfth sum, where the twelfth sum is a sum of the eleventh sum and the first slot number value, and the first slot number value is denoted as k, where k is a positive integer;

a fifth slot number value (represented by a parameter h), where the fifth slot number value is a value obtained by performing a modulo operation on the twelfth sum and a total quantity (represented by a parameter M) of slots included in each radio frame;

a fourth quotient, where the fourth quotient is a quotient obtained by dividing the eleventh sum by a total quantity of slots included in each radio frame;

a fourth integer value, where the fourth integer value is a floor operation value of the fourth quotient;

a sixth difference, where the sixth difference is a difference between a fourth radio frame number and a first parameter (represented by a parameter p), and the fourth radio frame number is represented by SFN; or

a fourth remainder, where the fourth remainder is a value obtained by performing a modulo operation on the sixth difference and an occurrence period (represented by a parameter T1) of the first resources associated with the target model.

The first slot number value represents a number value of a slot in a radio frame corresponding to a time domain start location of a 1st monitoring time window in either any resource repetition period within the periodic monitoring resource or the aperiodic monitoring resource; the fourth radio frame number represents a number of a radio frame to which a time domain start location of the at least one group of first resources associated with the target model belongs; and the first parameter represents a number value of a radio frame to which a time domain start location of a 1st monitoring time window in either any resource repetition period within the periodic monitoring resource or the aperiodic monitoring resource belongs, or represents a value obtained by performing a modulo operation on a number value of a radio frame to which a time domain start location of a 1st monitoring time window in any resource repetition period within the periodic monitoring resource belongs and a resource repetition period corresponding to the periodic monitoring resource.

Fifth slot number value $h = (z+k) \bmod M$.

The fourth radio frame number SFN is calculated according to the following formula:

$$(SFN-p) \bmod T1 = FLOOR(z/M),$$

or

$$(SFN-p+w) \bmod T1 = FLOOR(z/M)$$

T1 denotes the occurrence period of the first resources associated with the target model; values of occurrence periods of first resources associated with different models may be identical or different; M denotes the total quantity of slots included in each radio frame; mod denotes a modulo operation function; FLOOR denotes a floor operation function; a value of k is equal to a number of a slot in a radio frame corresponding to a time domain location at an instant $(a+b)$ in FIG. 6; and a value of p is equal to a number value of a radio frame to which the time domain location at the instant $(a+b)$ in FIG. 6 belongs, or a value of p is equal to a value obtained by performing a mod T operation on a number of a radio frame to which the time domain location at the instant $(a+b)$ in FIG. 6 belongs, $L_{(c+1)}$ denotes information about duration for performing a single monitoring operation on the target model, where w is a constant greater than or equal to 0, for example, w = 1024.

In an implementation, values of both a and b are 0. In this case, Parameter k = 0, and Parameter p = 0.

Values of h and SFN should not exceed constraints on the time domain end location of the monitoring resource (corresponding to the information 2) and/or the total quantity of resource repetition periods corresponding to the periodic monitoring resource (corresponding to the information 10).

Optionally, T1 denotes a time difference between two adjacent first resources associated with one target model, and T1 is configured at a granularity of a model identifier, or a model identifier group, or a device.

The parameter T1 is determined in at least one of the following manners:

·a predefinition procedure;
·a pre-configuration procedure;
·a unicast dedicated signalling procedure;
·a multicast signalling procedure; or
·a broadcast signalling procedure (including the form of system broadcast messages).

Optionally, the parameter n is determined in at least one of the following manners:

·a pre-configuration procedure;
·a unicast dedicated signalling procedure;
·a multicast signalling procedure; or
·a broadcast signalling procedure (including the form of system broadcast messages).

Optionally, a value of the parameter $L_i$ or $L_{(c+1)}$ is configured at a granularity of a model identifier, or a model identifier group, or a device, and the value of $L_i$ or $L_{(c+1)}$ is determined in at least one of the following manners:

·a predefinition procedure;
·a pre-configuration procedure;
·a unicast dedicated signalling procedure;
·a multicast signalling procedure; or
·a broadcast signalling procedure (including the form of system broadcast messages).

For example, the first device learns, through a signalling procedure, monitoring resource duration for performing a single monitoring operation on each model. The description is provided using three models as an example. Monitoring resource durations respectively for performing a single monitoring operation on the models are sequentially $L_1$, $L_2$, and $L_3$.

The first device learns, through a signalling procedure, time ratio information of a monitoring resource that each model expects to occupy. The description is provided using three models as an example. Time ratio information of monitoring resources that the three models respectively expect to occupy are sequentially 25%, 50%, and 25%, then $L_1 = 0.25 \times$ total duration of a single monitoring operation, $L_2 = 0.5 \times$ total duration of a single monitoring operation, $L_3 = 0.25 \times$ total duration of a single monitoring operation.

**Case 3:** At least one of the time domain start location information or the time domain end location information of the at least one group of first resources associated with the first model is determined based on the first information (corresponding to the monitoring resource configuration scheme 3) and the numbering information associated with the first model.

Optionally, the first model includes a target model, and sequence number information of at least one monitoring time window associated with the target model is determined based on the numbering information associated with the target model.

The numbering information associated with the target model is associated with one or more monitoring time windows included in the aperiodic monitoring resource, and an association relationship is determined according to the following formula:

$$c = d \bmod n$$

In which, c denotes the numbering information associated with the target model, d denotes a sequence number associated with any monitoring time window included in the monitoring resource, n denotes a total quantity of models or a total quantity of models involved in monitoring resource allocation, and mod denotes a modulo operator.

For a specific calculation method of the value of d, reference is made to the description of the corresponding part in Case 1. Details are not described herein again.

(1) Absolute time, such as UTC, is used to represent the time domain start location information and/or the time domain end location information of the at least one group of first resources associated with the first model.

The first model includes a target model, and the time domain information of the at least one group of first resources associated with the target model is determined based on at least one of the following information:

a first sum, where the first sum is a sum of the time domain start location (represented by a parameter a) of the monitoring resource and a second time offset (represented by a parameter b);

a second sum, where the second sum is a sum of the window length (represented by a parameter f) of a single monitoring time window and an interval (represented by a parameter g) between adjacent monitoring time windows;

a first difference, where the first difference is a difference between a sequence number corresponding to an $e^{th}$ group of first resources associated with the target model and a first value;

a second difference, where the second difference is a difference between a sequence number corresponding to a $q^{th}$ resource repetition period within the periodic monitoring resource and the first value;

a first product, where the first product is a product of the first difference, the second sum, and a total quantity of first models;

a second product, where the second product is a product of numbering information associated with the target model and the second sum; or

a thirteenth sum ((a+b) + (e-1) $\times$ n $\times$ (f+g) + c $\times$ (f+g)), where the thirteenth sum is a sum of the first sum, the first product, and the second product.

The second time offset is a time offset between a time domain start location of the aperiodic monitoring resource and a time domain start location of a $1^{st}$ monitoring time window corresponding to the aperiodic monitoring resource, where both e and q are positive integers. The description is provided using an example in which the first value is 1.

A time domain start location t1 of the at least one group of first resources associated with the target model includes the thirteenth sum, and may be expressed by the following formula:

$$t1 = (a+b) + (e-1) \times n \times (f+g) + c \times (f+g)$$

A time domain end location t2 of the at least one group of first resources associated with the target model includes a sum of the thirteenth sum and the window length of a single monitoring time window, and may be expressed by the following formula:

$$t2 = (a+b) + (e-1) \times n \times (f+g) + c \times (f+g) + f$$

In which, a denotes the time domain start location of the monitoring resource; b denotes the second time offset; e denotes a sequence number of a monitoring time window (that is, a group sequence number of first resources) associated with the same target model in chronological order, for example, if sequence numbers of monitoring time windows associated with the target model are sequentially 2, 5, and 8, then values of e are sequentially 1, 2, and 3; n denotes the total quantity of models or a total quantity of models participating in monitoring resource allocation; f denotes the window length of a single monitoring time window; g denotes the interval between adjacent monitoring time windows; and c denotes the numbering information associated with the target model.

Each fixed value of c corresponds to one target model, for example, a value 0 of c corresponds to a model A, and depending on variation in values of e (values of e are sequentially 1, 2, 3, ...), a time domain start location of each group of first resources (each monitoring time window) associated with the model A and/or a time domain end location of each group of first resources (each monitoring time window) associated with the model A may be sequentially obtained.

Time domain locations corresponding to t1 and t2 should not exceed a constraint on the time domain end location of the monitoring resource (corresponding to the information 2).

For example, in FIG. 7, a = 0, b = 0, n = 3, f = 2, and g = 1. A value 0 of c corresponds to a model A, a first group of first resources associated with the model A corresponds to a monitoring time window 1, and t1 and t2 of the first group of first resources associated with the model A are respectively as follows: t1 = 0 + 0 + (1-1) × 3 × (2+1) + 0 × (2+1) = 0 and t2 = 0 + 0 + (1-1) × 3 × (2+1) + 0 × (2+1) + 2 = 2.

A value 1 of c corresponds to a model B, a first group of first resources associated with the model B corresponds to a monitoring time window 2, and t1 and t2 of the first group of first resources associated with the model B are respectively as follows: t1 = 0 + 0 + (1-1) × 3 × (2+1) + 1 × (2+1) = 3 and t2 = 0 + 0 + (1-1) × 3 × (2+1) + 1 × (2+1) + 2 = 5.

A value 2 of c corresponds to a model C, a first group of first resources associated with the model C corresponds to a monitoring time window 3, and t1 and t2 of the first group of first resources associated with the model C are respectively as follows: t1 = 0 + 0 + (1-1) × 3 × (2+1) + 2 × (2+1) = 6 and t2 = 0 + 0 + (1-1) × 3 × (2+1) + 2 × (2+1) + 2 = 8.

(2) A time domain unit, such as a system frame number or a slot number value, is used to represent the time domain start location information and/or the time domain end location information of the at least one group of first resources associated with the first model.

Reference is made to the description in Case 1: a time domain unit, such as a system frame number or a slot number value, is used to represent the time domain start location information and/or the time domain end location information of the at least one group of first resources associated with the first model. Details are not described herein again.

Optionally, T1 denotes a time difference between two adjacent first resources (or monitoring time windows) associated with one target model, and T1 is configured at a granularity of a model identifier, or a model identifier group, or a device.

The parameter T1 is determined in at least one of the following manners:

·a predefinition procedure;
·a pre-configuration procedure;
·a unicast dedicated signalling procedure;
·a multicast signalling procedure; or
·a broadcast signalling procedure (including the form of system broadcast messages).

Optionally, the parameter n is determined in at least one of the following manners:

·a pre-configuration procedure;
·a unicast dedicated signalling procedure;
·a multicast signalling procedure; or
·a broadcast signalling procedure (including the form of system broadcast messages).

**Case 4:** At least one of the time domain start location information or the time domain end location information of the at least one group of first resources associated with the first model is determined based on the first information (corresponding to the monitoring resource configuration scheme 4) and the numbering information associated with the first model.

The first model includes a target model.

(1) Absolute time, such as UTC, is used to represent the time domain start location information and/or the time domain end location information of the at least one group of first resources associated with the first model.

The first model includes a target model, the time domain information of the at least one group of first resources associated with the target model is represented by absolute time, and the time domain information of the at least one group of first resources associated with the target model is determined based on at least one of the following information:

a first sum, where the first sum is a sum of the time domain start location (represented by a parameter a) of the monitoring resource and a second time offset (represented by a parameter b);

a first difference, where the first difference is a difference between a sequence number corresponding to an $e^{th}$ group of first resources associated with the target model and a first value;

a seventh sum, where the seventh sum is a sum of durations respectively for performing a single monitoring operation on first models, and is expressed as $\sum_{i=1}^{n} Li$;

a fourth product, where the fourth product is a product of the first difference and the seventh sum;

an eighth sum, where the eighth sum is a sum of durations respectively for performing a single monitoring operation on first models starting from a $1^{st}$ (a resource allocation order of each first model is determined based on the numbering information associated with the first model) first model to the target model, and is expressed as $\sum_{i=0}^{c} Li$;

a fourteenth sum ($(a+b) + (e-1) \times \sum_{i=1}^{n} Li) + \sum_{i=0}^{c} Li$), where the fourteenth sum is a sum of the first sum, the fourth product, and the eighth sum.

The second time offset is a time offset between a time domain start location of the aperiodic monitoring resource and a time domain start location of a $1^{st}$ monitoring time window corresponding to the aperiodic monitoring resource, where both e and q are positive integers. The description is provided using an example in which the first value is 1.

A time domain start location t1 of the at least one group of first resources associated with the target model includes the fourteenth sum, and may be expressed by the following formula:

$$t1 = (a+b) + (e-1) \times \sum_{i=1}^{n} Li + \sum_{i=0}^{c} Li$$

A time domain end location t2 of the at least one group of first resources associated with the target model includes a sum of the fourteenth sum and duration for performing a single monitoring operation on the target model, and may be expressed by the following formula:

$$t2 = (a+b) + (e-1) \times \sum_{i=1}^{n} Li + \sum_{i=0}^{c} Li + L_{(c+1)}$$

In which, a denotes the time domain start location of the monitoring resource; b denotes the second time offset; e denotes a group sequence number of of first resources associated with the same target model in chronological order, where values of e are sequentially 1, 2, and 3; n denotes the total quantity of models or a total quantity of models participating in monitoring resource allocation; c denotes the numbering information associated with the target model; $L_i$ denotes information about duration for performing a single monitoring operation on a model with the value of c equaling (i-1) (a value of i is 1, 2, ..., n); and $L_{(c+1)}$ denotes information about duration for performing a single monitoring operation on the target model (for example, values of numbers respectively associated with models A, B, and C are sequentially 0, 1, and 2, and durations respectively for performing a single monitoring operation on the models are sequentially 5 ms, 10 ms, and 15 ms, then $L_1 = 5$, $L_2 = 10$, and $L_3 = 15$, with $L_0$ defined as 0).

Each fixed value of c corresponds to one target model, for example, a value 0 of c corresponds to a model A, and depending on variation in values of e (values of e are sequentially 1, 2, 3, ...), a time domain start location of each group of first resources associated with the model A and/or a time domain end location of each group of first resources associated with the model A may be sequentially obtained.

Time domain locations corresponding to t1 and t2 should not exceed a constraint on the time domain end location of the monitoring resource (corresponding to the information 2).

For example, in FIG. 8, a = 0, b = 0, n = 3, a value 0 of c corresponds to the target model, $L_1 = 5$, $L_2 = 3$, $L_3 = 2$, $L_0 = 0$, and time domain start locations t1 and t2 of the first group of first resources associated with the target model are respectively as follows: t1 = 0 + 0 + (1-1) × (5+3+2) + $L_0$ = 0 and t2 = 0 + 0 + (1-1) × (5+3+2) + $L_0$ + $L_1$ = 5.

(2) A time domain unit, such as a system frame number or a slot number value, is used to represent the time domain start location information and/or the time domain end location information of the at least one group of first resources associated with the first model.

Reference is made to the description in Case 2: a time domain unit, such as a system frame number or a slot number value, is used to represent the time domain start location information and/or the time domain end location information of the at least one group of first resources associated with the first model. Details are not described herein again.

Optionally, T1 denotes a time difference between two adjacent first resources associated with one target model, and T1 is configured at a granularity of a model identifier, or a model identifier group, or a device.

The parameter T1 is determined in at least one of the following manners:

· a predefinition procedure;
· a pre-configuration procedure;
· a unicast dedicated signalling procedure;
· a multicast signalling procedure; or
· a broadcast signalling procedure (including the form of system broadcast messages).

Optionally, the parameter n is determined in at least one of the following manners:

· a pre-configuration procedure;
· a unicast dedicated signalling procedure;
· a multicast signalling procedure; or
· a broadcast signalling procedure (including the form of system broadcast messages).

Optionally, a value of the parameter $L_i$ or $L_{(c+1)}$ is configured at a granularity of a model identifier, or a model identifier group, or a device, and the value of $L_i$ or $L_{(c+1)}$ is determined in at least one of the following manners:

· a predefinition procedure;
· a pre-configuration procedure;
· a unicast dedicated signalling procedure;
· a multicast signalling procedure; or
· a broadcast signalling procedure (including the form of system broadcast messages).

For example, the first device learns, through a signalling procedure, monitoring resource duration for performing a single monitoring operation on each model. The description is provided using three models as an example. Monitoring resource durations respectively for performing a single monitoring operation on the models are sequentially $L_1$, $L_2$, and $L_3$.

The first device learns, through a signalling procedure, time ratio information of a monitoring resource that each model expects to occupy. The description is provided using three models as an example. Time ratio information of monitoring resources that the three models respectively expect to occupy is sequentially 25%, 50%, and 25%, then $L_1 = 0.25 \times$ total duration of a single monitoring operation, $L_2 = 0.5 \times$ total duration of a single monitoring operation, $L_3 = 0.25 \times$ total duration of a single monitoring operation.

In conclusion, according to the method provided in this embodiment, the time domain information of the at least one group of first resources associated with the first model is determined, where the first resources are associated with the model monitoring process of the first model, so that time domain locations associated with model monitoring processes of different models can be determined, thereby being beneficial to that the first device and the second device maintain consistency in model monitoring order.

According to the method provided in this embodiment, the time domain information of the at least one group of first resources associated with the first model is determined according to the four monitoring resource configuration schemes, thereby implementing flexible allocation for a plurality of first models under different monitoring resource configuration schemes.

According to the method provided in this embodiment, at least two first models are associated with a same set of first information, thereby reducing resource overheads of the system for monitoring processes.

According to the method provided in this embodiment, each first model is associated with respective first information, thereby reducing resource allocation complexity.

FIG. 9 is a flowchart of an information determining method according to an example embodiment of this application. The method is executed by a first device, and the method includes the following step 910.

In **step 910,** the first device acquires first information.

In some embodiments, the first information is used to determine time domain information and/or frequency domain information of at least one group of first resources associated with a first model. For detailed description of the first information, reference is made to the corresponding description of step 410 in FIG. 4. Details are not described herein again.

In conclusion, according to the method provided in this embodiment, the time domain information of the at least one group of first resources associated with the first model is determined based on the first information and/or numbering information associated with the first model, where the first model is an AI model or an ML model, and the time domain information is associated with a model monitoring process of the first model, so that time domain locations of at least one group of first resources associated with different models can be determined, thereby being beneficial to that the first device and the second device maintain consistency in model monitoring order.

In some embodiments, the numbering information (or referred to as logical number information, that is, the parameter c) associated with the first model may be determined by using at least one of the following three manners:

(1) determining, based on second information, the numbering information associated with the first model;
(2) determining, based on third information, the numbering information associated with the first model; or
(3) determining, in a predefined manner, the numbering information associated with the first model.

For the determining manner (1), FIG. 10 is a flowchart of an information determining method according to an example embodiment of this application. The method is executed by a first device, and the method includes the following step 1010.

In **step 1010,** the first device receives second information transmitted by a second device.

In some embodiments, the first device receives the second information transmitted by the second device. For example, a terminal device receives the second information transmitted by a network device.

In some embodiments, the first device transmits the second information to the second device. For example, a network device transmits the second information to a terminal device.

In some embodiments, the first device determines, based on explicit configuration of the second information, the numbering information associated with the first model.

In some embodiments, the second information includes model identifier information of the first model and at least one piece of numbering information.

The first device determines, based on a first association relationship, the numbering information associated with the first model, where the first association relationship is an association relationship between the model identifier information of the first model and the at least one piece of numbering information.

The model identifier information is used to identify different models, and the numbering information is used to indicate numbers associated with different models.

In some embodiments, the first association relationship includes at least one of the following:

·one piece of model identifier information is associated with one piece of numbering information;
·one piece of model identifier information is associated with a plurality of pieces of numbering information;
·a plurality of pieces of model identifier information are associated with one piece of numbering information; or
·a plurality of pieces of model identifier information are associated with a plurality of pieces of numbering information.

For example, the description is provided using an example in which the numbering information is logical numbering information. An example of the first association relationship is as shown in Table 1.

Table 1

| Model identifier associated with the first model | Logical numbering information |
|---|---|
| Model identifier 1 | A value is 1 |
| Model identifier 2 | A value is 3 or 4 |
| ... | ... |
| Model identifier n | A value is 2 |

In Table 1, a model identifier associated with the first model included in each row is associated with at least one piece of logical numbering information. For example, a model identifier 1 is associated with one piece of logical numbering information with a value of 1, and a model identifier 2 is associated with two pieces of logical numbering information with values of 3 and 4, respectively. There are other examples of the first association relationship, and the examples are not listed one by one herein. A value of n is a positive integer.

In some embodiments, the first device receives, in at least one of the following manners, the second information transmitted by the second device:

·a pre-configuration procedure;

·a unicast dedicated signalling procedure;
·a multicast signalling procedure; or
·a broadcast signalling procedure (including the form of system broadcast messages).

For the determining method (2), FIG. 11 is a flowchart of an information determining method according to an example embodiment of this application. The method is executed by a first device, and the method includes the following step 1110.

In **step 1110,** the first device receives third information transmitted by a second device.

In some embodiments, the first device receives the third information transmitted by the second device. For example, a terminal device receives the third information transmitted by a network device.

In some embodiments, the first device transmits the third information to the second device. For example, a network device transmits the third information to a terminal device.

In some embodiments, the first device determines, based on implicit configuration of the third information, the numbering information associated with the first model.

In some embodiments, the third information includes model identifier information of at least one first model.

The first device determines, based on a second association relationship, the number informationing associated with the first model, where the second association relationship is an association relationship between location information of model identifier information of the first model in the third information and the numbering information associated with the first model.

The model identifier information is used to identify different models, and the numbering information is used to indicate numbers associated with different models.

In some embodiments, the model identifier information of the first model is configured in a form of list parameters, each element in the list parameters corresponds to one model identifier, and location information of each element in the list parameters corresponds to numbering information of the first model.

For example, the description is provided using an example in which the numbering information is logical numbering information. An example of the second association relationship is as shown in Table 2.

Table 2

| 1st element: model identifier 1 |
| --- |
| 2st element: model identifier 2 |
| ... |
| nth element: model identifier n |

In Table 2, a plurality of pieces of model identifier information form parameter information in a list. A 1st element in the list corresponds to a model identifier 1, and a location sequene number of the 1st element in list parameters is 1. In this case, it is considered that a value of logical numbering information corresponding to the 1st element is 0 (or 1); similarly, a value of logical numbering information corresponding to a model identifier 2 is 1 (or 2); and by analogy, a value of logical numbering information corresponding to a model identifier n is n-1 (or n), where a value of n is a positive integer.

In some embodiments, the first device receives, in at least one of the following manners, the second information transmitted by the second device:

·a pre-configuration procedure;
·a unicast dedicated signalling procedure;
·a multicast signalling procedure; or
·a broadcast signalling procedure (including the form of system broadcast messages).

For the determining manner (3), in some embodiments, the first device determining, in the predefined manner, the numbering information associated with the first model includes at least one of the following manners:

① determining, based on a value of model identifier information of the first model, the numbering information associated with the first model; or
② determining, based on monitoring priority information associated with the first model, the numbering information associated with the first model.

In the predefined manner ①, the numbering information associated with the first model is determined based on the value of the model identifier information of the first model.

For example, there are three first models, and values of model identifier information of the three first models are sequentially '2', '8', and '30'. Therefore, a first model with a value of model identifier information equaling '2' corresponds to a value of numbering information '0' (or '1'); a first model with a value of model identifier information equaling '8' corresponds to a value of numbering information '1' (or '2'); and a first model with a value of model identifier information equaling '30' corresponds to a value of numbering information '2' (or '3').

In the predefined manner ②, the numbering information associated with the first model is determined based on the monitoring priority information associated with the first model.

For example, there are three first models, and values of monitoring priority information of the three first models are sequentially '3', '9', and '15'. Therefore, a first model with a value of monitoring priority information equaling '3' corresponds to a value of numbering information '0' (or '1'); a first model with a value of monitoring priority information equaling '9' corresponds to a value of numbering information '1' (or '2'); and a first model with a value of monitoring priority information equaling '15' corresponds to a value of numbering information '2' (or '3').

In some embodiments, the numbering information associated with the first model may be determined partially based on configuration of the second information or the third information, and partially based on the predefined manner. This is not limited in this application.

In some embodiments, FIG. 12 is a flowchart of an information determining method according to an example embodiment of this application. The method is executed by a first device, and the method includes the following step 1210.

In **step 1210,** the first device transmits first capability information to a second device.

The first capability information is used to indicate a related capability of the first device in model monitoring.

In some embodiments, the first capability information includes at least one of the following information:

whether to support an allocation mode of a monitoring resource based on numbering information;
whether to support an allocation mode of a periodic monitoring resource based on the numbering information;
whether to support an allocation mode of a first monitoring resource based on the numbering information;
whether to support an allocation mode of a second monitoring resource based on the numbering information;
whether to support an allocation mode of an aperiodic monitoring resource based on the numbering information;
whether to support an allocation mode of a third monitoring resource based on the numbering information;
whether to support an allocation mode of a fourth monitoring resource based on the numbering information;
whether to support an allocation mode of a monitoring resource based on independent monitoring resource configuration; or
a supported monitoring resource allocation mode.

The first monitoring resource is a periodic monitoring resource, any resource repetition period within the periodic monitoring resource includes a plurality of monitoring time windows, and the allocation mode of the first monitoring resource corresponds to the resource configuration scheme 1 in the embodiment shown in FIG. 5.

The second monitoring resource is a periodic monitoring resource, any resource repetition period within the periodic monitoring resource includes one monitoring time window, and the allocation mode of the second monitoring resource corresponds to the resource configuration scheme 2 in the embodiment shown in FIG. 6.

The third monitoring resource is an aperiodic monitoring resource, any aperiodic monitoring resource includes a plurality of monitoring time windows, and the allocation mode of the third monitoring resource corresponds to the resource configuration scheme 3 in the embodiment shown in FIG. 7.

The fourth monitoring resource is an aperiodic monitoring resource, any aperiodic monitoring resource includes one monitoring time window, and the allocation mode of the fourth monitoring resource corresponds to the resource configuration scheme 4 in the embodiment shown in FIG. 8.

In conclusion, according to the method provided in this embodiment, the first capability information is transmitted, so that the second device determines whether the first device supports a related monitoring resource allocation mode, and therefore the second device configures a corresponding monitoring resource, thereby avoiding configuring improper monitoring resources for the first device.

In some embodiments, FIG. 13 is a flowchart of an information determining method according to an example embodiment of this application. The method is executed by a first device, and the method includes the following step 1310.

In **step 1310,** the first device receives second capability information transmitted by a second device.

The second capability information is used to indicate a related capability of the second device in model monitoring.

In some embodiments, the second capability information includes at least one of the following information:

whether to support an allocation mode of a monitoring resource based on numbering information;
whether to support an allocation mode of a periodic monitoring resource based on the numbering information;
whether to support an allocation mode of a first monitoring resource based on the numbering information;

whether to support an allocation mode of a second monitoring resource based on the numbering information;
whether to support an allocation mode of an aperiodic monitoring resource based on the numbering information;
whether to support an allocation mode of a third monitoring resource based on the numbering information;
whether to support an allocation mode of a fourth monitoring resource based on the numbering information;
whether to support an allocation mode of a monitoring resource based on independent monitoring resource configuration; or
a supported monitoring resource allocation mode.

The first monitoring resource is a periodic monitoring resource, any resource repetition period within the periodic monitoring resource includes a plurality of monitoring time windows, and the allocation mode of the first monitoring resource corresponds to the resource configuration scheme 1 in the embodiment shown in FIG. 5.

The second monitoring resource is a periodic monitoring resource, any resource repetition period within the periodic monitoring resource includes one monitoring time window, and the allocation mode of the second monitoring resource corresponds to the resource configuration scheme 2 in the embodiment shown in FIG. 6.

The third monitoring resource is an aperiodic monitoring resource, any aperiodic monitoring resource includes a plurality of monitoring time windows, and the allocation mode of the third monitoring resource corresponds to the resource configuration scheme 3 in the embodiment shown in FIG. 7.

The fourth monitoring resource is an aperiodic monitoring resource, any aperiodic monitoring resource includes one monitoring time window, and the allocation mode of the fourth monitoring resource corresponds to the resource configuration scheme 4 in the embodiment shown in FIG. 8.

In conclusion, according to the method provided in this embodiment, the second capability information is received, so that the first device determines whether the second device supports a related monitoring resource allocation mode, and therefore the first device configures or requests a corresponding monitoring resource, thereby avoiding configuring improper monitoring resources for the first device or the second device.

In the foregoing embodiment, the embodiment corresponding to FIG. 4, the embodiment corresponding to FIG. 9, and the embodiment corresponding to FIG. 10 may be implemented in combination.

The embodiment corresponding to FIG. 4, the embodiment corresponding to FIG. 9, and the embodiment corresponding to FIG. 11 may be implemented in combination.

The embodiment corresponding to FIG. 4, the embodiment corresponding to FIG. 9, the embodiment corresponding to FIG. 10, the embodiment corresponding to FIG. 12, and the embodiment corresponding to FIG. 13 may be implemented in combination.

The embodiment corresponding to FIG. 4, the embodiment corresponding to FIG. 9, the embodiment corresponding to FIG. 11, the embodiment corresponding to FIG. 12, and the embodiment corresponding to FIG. 13 may be implemented in combination, which is not limited in this application.

FIG. 14 is a flowchart of an information transmission method according to an example embodiment of this application. The method is executed by a second device, and the method includes the following step 1410.

In **step 1410,** the second device transmits first information to a first device.

The first information is associated with a model monitoring process of a first model, and the first model is an AI model or an ML model.

The first information includes at least one of the following information:

a time domain start location of a monitoring resource;
a time domain end location of a monitoring resource;
a first time offset;
a total quantity of monitoring time windows included in an aperiodic monitoring resource;
a window length of a single monitoring time window;
an interval between adjacent monitoring time windows;
a resource repetition period corresponding to a periodic monitoring resource;
a second time offset;
a total quantity of monitoring time windows included in a single resource repetition period within a periodic monitoring resource; or
a total quantity of resource repetition periods corresponding to the periodic monitoring resource.

The first time offset is a time offset between a time domain start location of the aperiodic monitoring resource and a time domain start location of a 1st monitoring time window corresponding to the aperiodic monitoring resource; the second time offset is a time offset between a time domain start location of a 1st monitoring time window in any resource repetition period within the periodic monitoring resource and a time domain start location of a latest single resource repetition period within the periodic monitoring resource; and time domain resources corresponding to the time domain information of the at least one group of first resources are included in the monitoring resource or are a part of the monitoring resource.

For description of specific implementation details, reference is made to the corresponding description of step 410 in FIG. 4, and the details are not described herein again.

FIG. 15 is a flowchart of an information transmission method according to an example embodiment of this application. The method is executed by a second device, and the method includes the following step 1510.

In **step 1510,** the second device transmits second information or third information to a first device.

The second information or the third information is used to determine numbering information of a first model. The second information is used to determine the numbering information of the first model in an explicit configuration manner, and the third information is used to determine the numbering information of the first model in an implicit configuration manner.

For specific implementation details, reference is made to step 1010 in FIG. 10 or step 1110 in FIG. 11. Details are not described herein again.

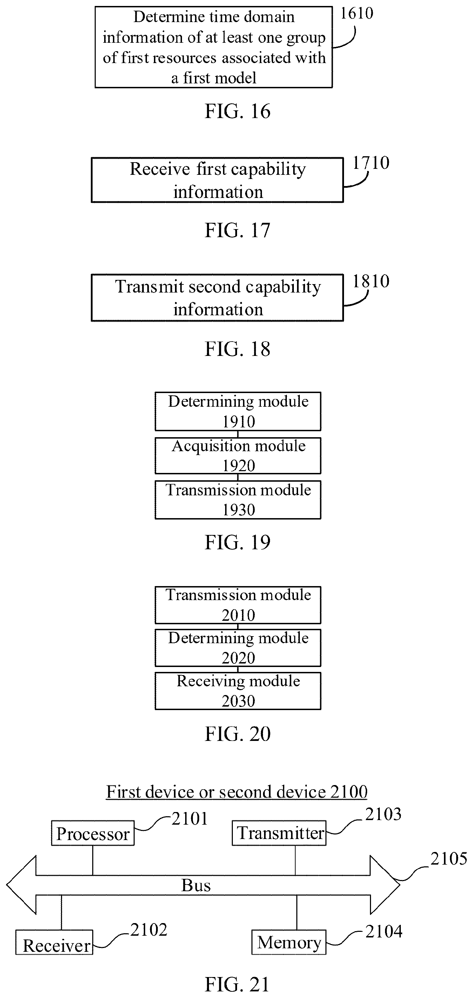

FIG. 16 is a flowchart of an information transmission method according to an example embodiment of this application. The method is executed by a second device, and the method includes the following step 1610.

In **step 1610,** the second device determines at least one group of time domain information associated with a first model.

The time domain information is associated with a model monitoring process of the first model.

For specific implementation details, reference is made to step 410 in FIG. 4. Details are not described herein again.

FIG. 17 is a flowchart of an information transmission method according to an example embodiment of this application. The method is executed by a second device, and the method includes the following step 1710.

In **step 1710,** the second device receives first capability information transmitted by a first device.

The first capability information is used to indicate a related capability of the first device in model monitoring.

In some embodiments, the first capability information includes at least one of the following information:

whether to support an allocation mode of a monitoring resource based on numbering information;
whether to support an allocation mode of a periodic monitoring resource based on the numbering information;
whether to support an allocation mode of a first monitoring resource based on the numbering information;
whether to support an allocation mode of a second monitoring resource based on the numbering information;
whether to support an allocation mode of an aperiodic monitoring resource based on the numbering information;
whether to support an allocation mode of a third monitoring resource based on the numbering information;
whether to support an allocation mode of a fourth monitoring resource based on the numbering information;
whether to support an allocation mode of a monitoring resource based on independent monitoring resource configuration; or
a supported monitoring resource allocation mode.

The first monitoring resource is a periodic monitoring resource, and any resource repetition period within the periodic monitoring resource includes a plurality of monitoring time windows; the second monitoring resource is the periodic monitoring resource, and any resource repetition period within the periodic monitoring resource includes one monitoring time window; the third monitoring resource is an aperiodic monitoring resource, and any aperiodic monitoring resource includes a plurality of monitoring time windows; and the fourth monitoring resource is the aperiodic monitoring resource, and any aperiodic monitoring resource includes one monitoring time window.

For specific implementation details, reference is made to step 1210 in FIG. 12. Details are not described herein again.

FIG. 18 is a flowchart of an information transmission method according to an example embodiment of this application. The method is executed by a second device, and the method includes the following step 1810.

In **step 1810,** the second device transmits second capability information to a first device.

In some embodiments, the second capability information is used to indicate a related capability of the second device in a model monitoring dimension.

The second capability information includes at least one of the following information:

whether to support an allocation mode of a monitoring resource based on numbering information;
whether to support an allocation mode of a periodic monitoring resource based on the numbering information;
whether to support an allocation mode of a first monitoring resource based on the numbering information;
whether to support an allocation mode of a second monitoring resource based on the numbering information;
whether to support an allocation mode of an aperiodic monitoring resource based on the numbering information;
whether to support an allocation mode of a third monitoring resource based on the numbering information;

whether to support an allocation mode of a fourth monitoring resource based on the numbering information;

whether to support an allocation mode of a monitoring resource based on independent monitoring resource configuration; or

a supported monitoring resource allocation mode.

The first monitoring resource is a periodic monitoring resource, and any resource repetition period within the periodic monitoring resource includes a plurality of monitoring time windows; the second monitoring resource is the periodic monitoring resource, and any resource repetition period within the periodic monitoring resource includes one monitoring time window; the third monitoring resource is an aperiodic monitoring resource, and any aperiodic monitoring resource includes a plurality of monitoring time windows; and the fourth monitoring resource is the aperiodic monitoring resource, and any aperiodic monitoring resource includes one monitoring time window.

For specific implementation details, reference is made to step 1310 in FIG. 13. Details are not described herein again.

Any information involved in the foregoing embodiments is carried by any of the following messages, or any message involved in the foregoing embodiments is any one of the following:

an LPP message, a NAS message, an RRC message, a medium access control control element (Media Access Control Control Element, MAC CE) message, a downlink control information (Downlink Control Information, DCI) message, an uplink control information (Uplink Control Information, UCI) message, a physical uplink control channel (Physical Uplink Control Channel, PUCCH) message, a physical uplink shared channel (Physical Uplink Shared Channel, PUSCH) message, an Inter-node message, an Xn interface message, an F1 interface message, an E1 interface message, an NG interface message, or a core network bus message.

Optionally, any information involved in the foregoing embodiments is carried by any of the following messages, or any message involved in the foregoing embodiments is any one of the following:

a unicast message, a multicast message, or a broadcast message.

Unicast message (one-to-one): an information source transmits a unicast message by using a unicast channel, only a terminal device or network device to which a corresponding unicast resource has been allocated may attempt to receive the unicast message, and the unicast message may also be referred to as dedicated signalling.

Multicast message (one-to-multiple): an information source transmits a multicast message by using a multicast channel, a terminal device or a network device that is within multicast signal coverage and is a group member may attempt to receive the multicast message, and the terminal device or the network device acquires a multicast channel-related resource when joining a group.

Broadcast message (one-to-any): an information source transmits a broadcast message by using a broadcast channel, and any terminal device or network device within broadcast signal coverage may attempt to receive the broadcast message.

FIG. 19 is a block diagram of an information determining apparatus according to an exemplary embodiment of this application. The apparatus includes a determining module 1910, an acquisition module 1920, and a transmission module 1930. A function of the determining module 1910 is implemented by a processor in a first device, while functions of the acquisition module 1920 and the transmission module 1930 are implemented by a transceiver in the first device.

The determining module 1910 is configured to perform step 410 in the foregoing embodiment shown in FIG. 4.

The acquisition module 1920 is configured to perform step 910 in the foregoing embodiment shown in FIG. 9, step 1010 in the foregoing embodiment shown in FIG. 10, step 1110 in the foregoing embodiment shown in FIG. 11, and step 1310 in the embodiment shown in FIG. 13.

The transmission module 1930 is configured to perform step 1210 in the foregoing embodiment shown in FIG. 12.

FIG. 20 is a block diagram of an information transmission apparatus according to an exemplary embodiment of this application. The apparatus includes a transmission module 2010, a determining module 2020, and a receiving module 2030. A function of the determining module 2020 is implemented by a processor in a first device, while functions of the transmission module 2010 and the receiving module 2030 are implemented by a transceiver in a second device.

The transmission module 2010 is configured to perform step 1410 in the foregoing embodiment shown in FIG. 14, step 1510 in the foregoing embodiment shown in FIG. 15, and step 1810 in the foregoing embodiment shown in FIG. 18.

The determining module 2020 is configured to perform step 1610 in the foregoing embodiment shown in FIG. 16.

The receiving module 2030 is configured to perform step 1710 in the foregoing embodiment shown in FIG. 17.

FIG. 21 is a schematic structural diagram of a first device or a second device 2100 according to an example embodiment of this application. The first device or second device includes a processor 2101, a receiver 2102, a transmitter 2103, a memory 2104, and a bus 2105.

The processor 2101 includes one or more processing cores. The processor 2101 executes various functional applications and information processing by running a software program and a module. In some embodiments, the processor 2101 may be configured to implement functions and steps of the foregoing determining module 1910 and determining module 2020.

The receiver 2102 and the transmitter 2103 may be implemented as one communications component, the communications component may be a communications chip, and the communications component may be referred to as a transceiver. In some embodiments, the transceiver may be configured to implement functions and steps of the acquisition module 1920, the transmission module 1930, the transmission module 2010, and the receiving module 2030.

The memory 2104 is connected to the processor 2101 by using the bus 2105.

The memory 2104 may be configured to store at least one instruction, and the processor 2101 is configured to execute the at least one instruction, to implement the steps in the foregoing method embodiments.

In addition, the memory 2104 may be implemented using any type of volatile or non-volatile storage device, or a combination thereof. The volatile or non-volatile storage device includes, but is not limited to: a magnetic disk, an optical disc, an electrically-erasable programmable read-only memory (Electrically-Erasable Programmable Read Only Memory, EEPROM), an erasable programmable read-only memory (Erasable Programmable Read Only Memory, EPROM), a static random access memory (Static Random Access Memory, SRAM), a read-only memory (Read-Only Memory, ROM), a magnetic memory, a flash memory, and a programmable read-only memory (Programmable Read-Only Memory, PROM).

In some embodiments, the receiver 2102 independently receives signals/data, or the processor 2101 controls the receiver 2102 to receive signals/data, or the processor 2101 requests the receiver 2102 to receive signals/data, or the processor 2101 cooperates with the receiver 2102 to receive signals/data.

In some embodiments, the transmitter 2103 independently transmits signals/data, or the processor 2101 controls the transmitter 2103 to transmit signals/data, or the processor 2101 requests the transmitter 2103 to transmit signals/data, or the processor 2101 cooperates with the transmitter 2103 to transmit signals/data.

In an exemplary embodiment, there is further provided a computer-readable storage medium. The computer-readable storage medium stores at least one instruction, at least one segment of program, or a code set or instruction set, and the at least one instruction, the at least one segment of program, or the code set or instruction set is loaded and executed by a processor to implement the information determining method and the information transmission method provided in the foregoing method embodiments.

In an example embodiment, there is further provided a computer program product or a computer program. The computer program product or the computer program, when running on a processor, causes a first device to execute the information determining method provided in the foregoing method embodiments, and a second device to execute the information transmission method provided in the foregoing method embodiments.

A person of ordinary skill in the art may understand that all or some of the steps of the foregoing embodiments may be implemented by hardware or a program instructing related hardware. The program may be stored in a computer-readable storage medium. The computer-readable storage medium may be a read-only memory, a magnetic disk, an optical disc, or the like.

The foregoing descriptions are merely optional embodiments of this application, but are not intended to limit this application. Any modifications, equivalent replacements, improvements and the like made without departing from the spirit and principle of this application shall fall within the protection scope of this application.

**Claims**

1. An information determining method, wherein the method is executed by a first device, and the method comprises:

   determining at least one group of time domain information associated with a first model,
   wherein the first model is an artificial intelligence AI model or a machine learning ML model, and the time domain information is associated with a model monitoring process of the first model.

2. The method according to claim 1, wherein the determining the at least one group of time domain information associated with the first model comprises:

   determining time domain information of at least one group of first resources associated with the first model,
   wherein the first resources are associated with the model monitoring process of the first model.

3. The method according to claim 2, wherein the determining the time domain information of the at least one group of first resources associated with the first model comprises:

   determining, based on first information, the time domain information of the at least one group of first resources associated with the first model; or
   determining, based on numbering information associated with the first model, the time domain information of the at least one group of first resources associated with the first model; or

determining, based on the first information and the numbering information associated with the first model, the time domain information of the at least one group of first resources associated with the first model, wherein the first information is associated with the model monitoring process of the first model.

**4.** The method according to claim 3, wherein at least two first models are associated with a same set of first information.

**5.** The method according to claim 3, wherein each of the first model is associated with respective first information.

**6.** The method according to any one of claims 1 to 5, wherein each group of time domain information in the time domain information of the at least one group of first resources comprises at least one of following information:

time domain start location information of the first resources;
time domain end location information of the first resources; or
time domain length information of the first resources.

**7.** The method according to claim 6, wherein the time domain information of the first resources is represented by absolute time.

**8.** The method according to claim 6, wherein the time domain information of the first resources is represented by a time domain unit,
wherein the time domain unit comprises at least one of a hyper frame number, a system frame number, a subframe group number, a subframe number, a slot group number, a slot number, a symbol group number, or a symbol number.

**9.** The method according to any one of claims 1 to 6, wherein in a case in which the time domain information of the at least one group of first resources is a plurality of groups of time domain information, the plurality of groups of time domain information meet at least one of following conditions:

at least two groups of time domain information in a plurality of groups of time domain information associated with a same model do not overlap or partially overlap in time domain; or
at least two groups of time domain information in different time domain information associated with different models do not overlap or partially overlap in time domain.

**10.** The method according to any one of claims 3 to 5, wherein the first information comprises at least one of following information:

a time domain start location of a monitoring resource;
a time domain end location of a monitoring resource;
a first time offset;
a total quantity of monitoring time windows comprised in an aperiodic monitoring resource;
a window length of a single monitoring time window;
an interval between adjacent monitoring time windows;
a resource repetition period corresponding to a periodic monitoring resource;
a second time offset;
a total quantity of monitoring time windows comprised in a single resource repetition period within a periodic monitoring resource;
a total quantity of resource repetition periods corresponding to the periodic monitoring resource,
wherein the first time offset is a time offset between a time domain start location of the aperiodic monitoring resource and a time domain start location of a 1st monitoring time window corresponding to the aperiodic monitoring resource; the second time offset is a time offset between a time domain start location of a 1st monitoring time window in any resource repetition period within the periodic monitoring resource and a time domain start location of a latest single resource repetition period within the periodic monitoring resource; and time domain resources corresponding to the time domain information of the at least one group of first resources are comprised in the monitoring resource or are a part of the monitoring resource.

**11.** The method according to claim 3, further comprising:

determining, based on second information, the numbering information associated with the first model; or

determining, based on third information, the numbering information associated with the first model; or
determining, in a predefined manner, the numbering information associated with the first model.

12. The method according to claim 11, wherein the second information comprises model identifier information and at least one piece of numbering information of the first model;

wherein the determining, based on the second information, the numbering information associated with the first model comprises:

determining, based on a first association relationship, the numbering information associated with the first model, wherein the first association relationship is an association relationship between the model identifier information of the first model and the at least one piece of numbering information.

13. The method according to claim 12, wherein the first association relationship comprises at least one of following:

one piece of model identifier information is associated with one piece of numbering information;
one piece of model identifier information is associated with a plurality of pieces of numbering information;
a plurality of pieces of model identifier information are associated with one piece of numbering information; or
a plurality of pieces of model identifier information are associated with a plurality of pieces of numbering information.

14. The method according to claim 11, wherein the third information comprises model identifier information of at least one first model;

wherein the determining, based on the third information, the numbering information associated with the first model comprises:

determining, based on a second association relationship, the numbering information associated with the first model, wherein the second association relationship is an association relationship between location information of model identifier information of the first model in the third information and the numbering information associated with the first model.

15. The method according to claim 11, wherein the determining, in the predefined manner, the numbering information associated with the first model comprises:

determining, based on a value of model identifier information of the first model, the numbering information associated with the first model; or
determining, based on monitoring priority information associated with the first model, the numbering information associated with the first model.

16. The method according to any one of claims 3 to 15, wherein the first information comprises a periodic monitoring resource, and any resource repetition period within the periodic monitoring resource comprises a plurality of monitoring time windows.

17. The method according to any one of claims 3 to 15, wherein the first information comprises a periodic monitoring resource, and any resource repetition period within the periodic monitoring resource comprises one monitoring time window.

18. The method according to any one of claims 3 to 15, wherein the first information comprises an aperiodic monitoring resource, and any aperiodic monitoring resource comprises a plurality of monitoring time windows.

19. The method according to any one of claims 3 to 15, wherein the first information comprises an aperiodic monitoring resource, and any aperiodic monitoring resource comprises one monitoring time window.

20. The method according to claim 16, wherein the first model comprises a target model, time domain information of at least one group of first resources associated with the target model is represented by absolute time, and the time domain information of the at least one group of first resources associated with the target model is determined based on at least one of following information:

a first sum, wherein the first sum is a sum of a time domain start location of a monitoring resource and a second time offset;
a second sum, wherein the second sum is a sum of a window length of a single monitoring time window and an interval between adjacent monitoring time windows;

a first difference, wherein the first difference is a difference between a sequence number corresponding to an $e^{th}$ group of first resources associated with the target model and a first value;

a second difference, wherein the second difference is a difference between a sequence number corresponding to a $q^{th}$ resource repetition period within the periodic monitoring resource and the first value;

a first product, wherein the first product is a product of the first difference, the second sum, and a total quantity of first models;

a second product, wherein the second product is a product of the numbering information associated with the target model and the second sum; and

a third product, wherein the third product is a product of the second difference and a resource repetition period corresponding to the periodic monitoring resource; or

a third sum, wherein the third sum is a sum of the first sum, the first product, the second product, and the third product,

wherein the second time offset is a time offset between a time domain start location of a $1^{st}$ monitoring time window in any resource repetition period within the periodic monitoring resource and a time domain start location of a latest single resource repetition period within the periodic monitoring resource, wherein both e and q are positive integers.

21. The method according to claim 20, wherein

a time domain start location of the at least one group of first resources associated with the target model comprises the third sum;

and/or

a time domain end location of the at least one group of first resources associated with the target model comprises a sum of the third sum and the window length of a single monitoring time window.

22. The method according to claim 16 or 18, wherein the first model comprises a target model, time domain information of at least one group of first resources associated with the target model is represented by a time domain unit, and the time domain information of the at least one group of first resources associated with the target model is determined based on at least one of following information:

a second sum, wherein the second sum is a sum of a window length of a single monitoring time window and an interval between adjacent monitoring time windows;

a second product, wherein the second product is a product of numbering information associated with the target model and the second sum, and the second product is denoted as z, wherein z is greater than or equal to 0;

a fourth sum, wherein the fourth sum is a sum of the second product and a first slot number value, and the first slot number value is denoted as k, wherein k is a positive integer;

a second slot number value, wherein the second slot number value is a value obtained by performing a modulo operation on the fourth sum and a total quantity of slots comprised in each radio frame;

a first quotient, wherein the first quotient is a quotient obtained by dividing the second product by a total quantity of slots comprised in each radio frame;

a first integer value, wherein the first integer value is a floor operation value of the first quotient;

a third difference, wherein the third difference is a difference between a first radio frame number and a first parameter, and the first radio frame number is denoted as SFN;

a first remainder, wherein the first remainder is a value obtained by performing a modulo operation on the third difference and an occurrence period of the first resources associated with the target model,

wherein the first slot number value represents a number value of a slot in a radio frame corresponding to a time domain start location of a $1^{st}$ monitoring time window in either any resource repetition period within the periodic monitoring resource or the aperiodic monitoring resource; the first radio frame number represents a number of a radio frame to which a time domain start location of the at least one group of first resources associated with the target model belongs; and the first parameter represents a number value of a radio frame to which a time domain start location of a $1^{st}$ monitoring time window in either any resource repetition period within the periodic monitoring resource or the aperiodic monitoring resource belongs, or represents a value obtained by performing a modulo operation on a number value of a radio frame to which a time domain start location of a $1^{st}$ monitoring time window in any resource repetition period within the periodic monitoring resource belongs and a resource repetition period corresponding to the periodic monitoring resource.

23. The method according to claim 22, wherein

the time domain start location of the at least one group of first resources associated with the target model comprises time domain locations indicated by the first radio frame number and the second slot number value.

24. The method according to claim 16 or 18, wherein the first model comprises a target model, time domain information of at least one group of first resources associated with the target model is represented by a time domain unit, and the time domain information of the at least one group of first resources associated with the target model is determined based on at least one of following information:

a second sum, wherein the second sum is a sum of a window length of a single monitoring time window and an interval between adjacent monitoring time windows;

a second product, wherein the second product is a product of numbering information associated with the target model and the second sum;

a fifth sum, wherein the fifth sum is a sum of the second product and the window length of a single monitoring time window, and the fifth sum is denoted as z, wherein z is greater than or equal to 0;

a sixth sum, wherein the sixth sum is a sum of the fifth sum and the first slot number value, and the first slot number value is denoted as k, wherein k is a positive integer;

a third slot number value, wherein the third slot number value is a value obtained by performing a modulo operation on the sixth sum and a total quantity of slots comprised in each radio frame;

a second quotient, wherein the second quotient is a quotient obtained by dividing the fifth sum by a total quantity of slots comprised in each radio frame;

a second integer value, wherein the second integer value is a floor operation value of the second quotient;

a fourth difference, wherein the fourth difference is a difference between a second radio frame number and a first parameter, and the second radio frame number is represented by SFN; or

a second remainder, wherein the second remainder is a value obtained by performing a modulo operation on the fourth difference and an occurrence period of the first resources associated with the target model,

wherein the first slot number value represents a number value of a slot in a radio frame corresponding to a time domain start location of a $1^{st}$ monitoring time window in either any resource repetition period within the periodic monitoring resource or the aperiodic monitoring resource; the second radio frame number represents a number of a radio frame to which a time domain start location of the at least one group of first resources associated with the target model belongs; and the first parameter represents a number value of a radio frame to which a time domain start location of a $1^{st}$ monitoring time window in either any resource repetition period within the periodic monitoring resource or the aperiodic monitoring resource belongs, or represents a value obtained by performig a modulo operation on a number value of a radio frame to which a time domain start location of a $1^{st}$ monitoring time window in any resource repetition period within the periodic monitoring resource belongs and a resource repetition period corresponding to the periodic monitoring resource.

25. The method according to claim 24, wherein
a time domain end location of the at least one group of first resources associated with the target model comprises time domain locations indicated by the second radio frame number and the third slot number value.

26. The method according to claim 17, wherein the first model comprises a target model, time domain information of at least one group of first resources associated with the target model is represented by absolute time, and the time domain information of the at least one group of first resources associated with the target model is determined based on at least one of following information:

a first sum, wherein the first sum is a sum of a time domain start location of a monitoring resource and a second time offset;

a first difference, wherein the first difference is a difference between a sequence number corresponding to an $e^{th}$ group of first resources associated with the target model and a first value;

a second difference, wherein the second difference is a difference between a sequence number corresponding to a $q^{th}$ resource repetition period within the periodic monitoring resource and the first value;

a seventh sum, wherein the seventh sum is a sum of durations respectively for performing a single monitoring operation on first models;

a fourth product, wherein the fourth product is a product of the first difference and the seventh sum;

an eighth sum, wherein the eighth sum is a sum of durations respectively for performing a single monitoring operation on first models starting from a $1^{st}$ first model to the target model;

a third product, wherein the third product is a product of the second difference and a resource repetition period corresponding to the periodic monitoring resource; or

a ninth sum, wherein the ninth sum is a sum of the first sum, the fourth product, the eighth sum, and the third product,

wherein the second time offset is a time offset between a time domain start location of a 1st monitoring time window in any resource repetition period within the periodic monitoring resource and a time domain start location of a latest single resource repetition period within the periodic monitoring resource, wherein both e and q are positive integers.

27. The method according to claim 26, wherein

a time domain start location of the at least one group of first resources associated with the target model comprises the ninth sum; and/or

a time domain end location of the at least one group of first resources associated with the target model comprises a sum of the ninth sum and duration for performing a single monitoring operation on the target model.

28. The method according to claim 17 or 19, wherein the first model comprises a target model, time domain information of at least one group of first resources associated with the target model is represented by a time domain unit, and the time domain information of the at least one group of first resources associated with the target model is determined based on at least one of following information:

an eighth sum, wherein the eighth sum is a sum of durations respectively for performing a single monitoring operation on first models starting from a 1st first model to the target model, and the eighth sum is denoted as z, wherein z is greater than or equal to 0;

a tenth sum, wherein the tenth sum is a sum of the eighth sum and the first slot number value, and the first slot number value is denoted as k, wherein k is a positive integer;

a fourth slot number value, wherein the fourth slot number value is a value obtained by performing a modulo operation on the tenth sum and a total quantity of slots comprised in each radio frame;

a third quotient, wherein the third quotient is a quotient obtained by dividing the eighth sum by a total quantity of slots comprised in each radio frame;

a third integer value, wherein the third integer value is a floor operation value of the third quotient;

a fifth difference, wherein the fifth difference is a difference between a third radio frame number and a first parameter, and the third radio frame number is represented by SFN;

a third remainder, wherein the third remainder is a value obtained by performing a modulo operation on the fifth difference and an occurrence period of the first resources associated with the target model,

wherein the first slot number value represents a number value of a slot in a radio frame corresponding to a time domain start location of a 1st monitoring time window in either any resource repetition period within the periodic monitoring resource or the aperiodic monitoring resource; the third radio frame number represents a number of a radio frame to which a time domain start location of the at least one group of first resources associated with the target model belongs; and the first parameter represents a number value of a radio frame to which a time domain start location of a 1st monitoring time window in either any resource repetition period within the periodic monitoring resource or the aperiodic monitoring resource belongs, or represents a value obtained by performing a modulo operation on a number value of a radio frame to which a time domain start location of a 1st monitoring time window in any resource repetition period within the periodic monitoring resource belongs and a resource repetition period corresponding to the periodic monitoring resource.

29. The method according to claim 28, wherein

the time domain start location of the at least one group of first resources associated with the target model comprises time domain locations indicated by the third radio frame number and the fourth slot number value.

30. The method according to claim 17 or 19, wherein the first model comprises a target model, time domain information of at least one group of first resources associated with the target model is represented by a time domain unit, and the time domain information of the at least one group of first resources associated with the target model is determined based on at least one of following information:

an eighth sum, wherein the eighth sum is a sum of durations respectively for performing a single monitoring operation on first models starting from a 1st first model to the target model;

an eleventh sum, wherein the eleventh sum is a sum of the eighth sum and duration for performing a single monitoring operation on the target model, and the eleventh sum is denoted as z, wherein z is greater than or equal to 0;

a twelfth sum, wherein the twelfth sum is a sum of the eleventh sum and the first slot number value, and the first slot number value is denoted as k, wherein k is a positive integer;

a fifth slot number value, wherein the fifth slot number value is a value obtained by performing a modulo operation on the twelfth sum and a total quantity of slots comprised in each radio frame;

a fourth quotient, wherein the fourth quotient is a quotient obtained by dividing the eleventh sum by a total quantity of slots comprised in each radio frame;

a fourth integer value, wherein the fourth integer value is a floor operation value of the fourth quotient;

a sixth difference, wherein the sixth difference is a difference between a fourth radio frame number and a first parameter, and the fourth radio frame number is represented by SFN; or

a fourth remainder, wherein the fourth remainder is a value obtained by performing a modulo operation on the sixth difference and an occurrence period of the first resources associated with the target model,

wherein the first slot number value represents a number value of a slot in a radio frame corresponding to a time domain start location of a $1^{st}$ monitoring time window in either any resource repetition period within the periodic monitoring resource or the aperiodic monitoring resource; the fourth radio frame number represents a number of a radio frame to which a time domain start location of the at least one group of first resources associated with the target model belongs; and the first parameter represents a number value of a radio frame to which a time domain start location of a $1^{st}$ monitoring time window in either any resource repetition period within the periodic monitoring resource or the aperiodic monitoring resource belongs, or represents a value obtained by performing a modulo operation on a number value of a radio frame to which a time domain start location of a $1^{st}$ monitoring time window in any resource repetition period within the periodic monitoring resource belongs and a resource repetition period corresponding to the periodic monitoring resource.

31. The method according to claim 30, wherein

a time domain end location of the at least one group of first resources associated with the target model comprises time domain locations indicated by the fourth radio frame number and the fifth slot number value.

32. The method according to claim 18, wherein the first model comprises a target model, time domain information of at least one group of first resources associated with the target model is represented by absolute time, and the time domain information of the at least one group of first resources associated with the target model is determined based on at least one of following information:

a first sum, wherein the first sum is a sum of a time domain start location of a monitoring resource and a second time offset;

a second sum, wherein the second sum is a sum of a window length of a single monitoring time window and an interval between adjacent monitoring time windows;

a first difference, wherein the first difference is a difference between a sequence number corresponding to an $e^{th}$ group of first resources associated with the target model and a first value;

a second difference, wherein the second difference is a difference between a sequence number corresponding to a $q^{th}$ resource repetition period within the periodic monitoring resource and the first value;

a first product, wherein the first product is a product of the first difference, the second sum, and a total quantity of first models;

a second product, wherein the second product is a product of the numbering information associated with the target model and the second sum; and

a thirteenth sum, wherein the thirteenth sum is a sum of the first sum, the first product, and the second product, wherein the second time offset is a time offset between a time domain start location of the aperiodic monitoring resource and a time domain start location of a $1^{st}$ monitoring time window corresponding to the aperiodic monitoring resource, wherein both e and q are positive integers.

33. The method according to claim 32, wherein

a time domain start location of the at least one group of first resources associated with the target model comprises the thirteenth sum; and/or

a time domain end location of the at least one group of first resources associated with the target model comprises a sum of the thirteenth sum and the window length of a single monitoring time window.

34. The method according to claim 19, wherein the first model comprises a target model, time domain information of at least one group of first resources associated with the target model is represented by absolute time, and the time domain information of the at least one group of first resources associated with the target model is determined based on at least one of following information:

a first sum, wherein the first sum is a sum of a time domain start location of a monitoring resource and a second time offset;

a first difference, wherein the first difference is a difference between a sequence number corresponding to an $e^{th}$ group of first resources associated with the target model and a first value;

a seventh sum, wherein the seventh sum is a sum of durations respectively for performing a single monitoring operation on first models;

a fourth product, wherein the fourth product is a product of the first difference and the seventh sum;

an eighth sum, wherein the eighth sum is a sum of durations respectively for performing a single monitoring operation on first models starting from a $1^{st}$ first model to the target model;

a fourteenth sum, wherein the fourteenth sum is a sum of the first sum, the fourth product, and the eighth sum, wherein the second time offset is a time offset between a time domain start location of the aperiodic monitoring resource and a time domain start location of a $1^{st}$ monitoring time window corresponding to the aperiodic monitoring resource, wherein both e and q are positive integers.

35. The method according to claim 34, wherein

a time domain start location of the at least one group of first resources associated with the target model comprises the fourteenth sum; and/or

a time domain end location of the at least one group of first resources associated with the target model comprises a sum of the fourteenth sum and duration for performing a single monitoring operation on the target model.

36. The method according to any one of claims 16, 18, 20 to 25, or 32, or 33, wherein the first model comprises a target model, and the method further comprises:
determining, based on numbering information associated with the target model, sequence number information of at least one monitoring time window associated with the target model.

37. The method according to claim 36, wherein the determining, based on the numbering information associated with the target model, sequence number information of at least one monitoring time window associated with the target model comprises:

determining, based on a fifth reminder and the numbering information associated with the target model, the sequence number information of the at least one monitoring time window associated with the target model, wherein the fifth reminder is a value obtained by performing a modulo operation on a sequence number associated with any monitoring time window in the at least one monitoring time window and a total quantity of first models, and the fifth reminder is the same as the numbering information associated with the target model.

38. The method according to any one of claims 1 to 37, further comprising:
transmitting first capability information to a second device, wherein the first capability information is used to indicate a related capability of the first device in model monitoring.

39. The method according to claim 38, wherein the first capability information comprises at least one of following information:

whether to support an allocation mode of a monitoring resource based on numbering information;

whether to support an allocation mode of a periodic monitoring resource based on the numbering information;

whether to support an allocation mode of a first monitoring resource based on the numbering information;

whether to support an allocation mode of a second monitoring resource based on the numbering information;

whether to support an allocation mode of an aperiodic monitoring resource based on the numbering information;

whether to support an allocation mode of a third monitoring resource based on the numbering information;

whether to support an allocation mode of a fourth monitoring resource based on the numbering information;

whether to support an allocation mode of a monitoring resource based on independent monitoring resource configuration; or

a supported monitoring resource allocation mode,

wherein the first monitoring resource is a periodic monitoring resource, and any resource repetition period within the periodic monitoring resource comprises a plurality of monitoring time windows; the second monitoring resource is the periodic monitoring resource, and any resource repetition period within the periodic monitoring resource comprises one monitoring time window; the third monitoring resource is an aperiodic monitoring resource, and any aperiodic monitoring resource comprises a plurality of monitoring time windows; and the fourth monitoring resource is the aperiodic monitoring resource, and any aperiodic monitoring resource comprises one monitoring time window.

40. The method according to any one of claims 1 to 39, further comprising:
receiving second capability information transmitted by a second device, wherein the second capability information is used to indicate a related capability of the second device in model monitoring.

41. The method according to claim 40, wherein the second capability information comprises at least one of following information:

whether to support an allocation mode of a monitoring resource based on numbering information;
whether to support an allocation mode of a periodic monitoring resource based on the numbering information;
whether to support an allocation mode of a first monitoring resource based on the numbering information;
whether to support an allocation mode of a second monitoring resource based on the numbering information;
whether to support an allocation mode of an aperiodic monitoring resource based on the numbering information;
whether to support an allocation mode of a third monitoring resource based on the numbering information;
whether to support an allocation mode of a fourth monitoring resource based on the numbering information;
whether to support an allocation mode of a monitoring resource based on independent monitoring resource configuration; or
a supported monitoring resource allocation mode,
wherein the first monitoring resource is a periodic monitoring resource, and any resource repetition period within the periodic monitoring resource comprises a plurality of monitoring time windows; the second monitoring resource is the periodic monitoring resource, and any resource repetition period within the periodic monitoring resource comprises one monitoring time window; the third monitoring resource is an aperiodic monitoring resource, and any aperiodic monitoring resource comprises a plurality of monitoring time windows; and the fourth monitoring resource is the aperiodic monitoring resource, and any aperiodic monitoring resource comprises one monitoring time window.

42. The method according to any one of claims 1 to 41, wherein the first device and the second device meet one of following configurations:

the first device is a terminal device, and the second device is a network device; or
the first device is a network device, and the second device is a terminal device; or
both the first device and the second device are network devices; or
both the first device and the second device are terminal devices.

43. An information transmission method, wherein the method is executed by a second device, and the method comprises:

transmitting first information to a first device,
wherein the first information is associated with a model monitoring process of a first model, and the first model is an artificial intelligence AI model or a machine learning ML model.

44. The method according to claim 43, wherein the first information comprises at least one of following information:

a time domain start location of a monitoring resource;
a time domain end location of a monitoring resource;
a first time offset;
a total quantity of monitoring time windows comprised in an aperiodic monitoring resource;
a window length of a single monitoring time window;
an interval between adjacent monitoring time windows;
a resource repetition period corresponding to a periodic monitoring resource;
a second time offset;
a total quantity of monitoring time windows comprised in a single resource repetition period within a periodic monitoring resource; or
a total quantity of resource repetition periods corresponding to the periodic monitoring resource,
wherein the first time offset is a time offset between a time domain start location of the aperiodic monitoring resource and a time domain start location of a 1<sup>st</sup> monitoring time window corresponding to the aperiodic monitoring resource; the second time offset is a time offset between a time domain start location of a 1<sup>st</sup> monitoring time window in any resource repetition period within the periodic monitoring resource and a time domain start location of a latest single resource repetition period within the periodic monitoring resource; and time domain resources corresponding to the time domain information of the at least one group of first resources are comprised in the monitoring resource or are a part of the monitoring resource.

45. The method according to claim 43 or 44, further comprising:

transmitting second information or third information to the first device,
wherein the second information or the third information is used to determine numbering information of the first model.

46. The method according to any one of claims 43 to 45, further comprising:

determining at least one group of time domain information associated with the first model,
wherein the time domain information is associated with the model monitoring process of the first model.

47. The method according to any one of claims 43 to 46, further comprising:
receiving first capability information transmitted by the first device, wherein the first capability information is used to indicate a related capability of the first device in model monitoring.

48. The method according to claim 47, wherein the first capability information comprises at least one of following information:

whether to support an allocation mode of a monitoring resource based on numbering information ;
whether to support an allocation mode of a periodic monitoring resource based on the numbering information;
whether to support an allocation mode of a first monitoring resource based on the numbering information;
whether to support an allocation mode of a second monitoring resource based on the numbering information;
whether to support an allocation mode of an aperiodic monitoring resource based on the numbering information;
whether to support an allocation mode of a third monitoring resource based on the numbering information;
whether to support an allocation mode of a fourth monitoring resource based on the numbering information;
whether to support an allocation mode of a monitoring resource based on independent monitoring resource configuration; or
a supported monitoring resource allocation mode,
wherein the first monitoring resource is a periodic monitoring resource, and any resource repetition period within the periodic monitoring resource comprises a plurality of monitoring time windows; the second monitoring resource is the periodic monitoring resource, and any resource repetition period within the periodic monitoring resource comprises one monitoring time window; the third monitoring resource is an aperiodic monitoring resource, and any aperiodic monitoring resource comprises a plurality of monitoring time windows; and the fourth monitoring resource is the aperiodic monitoring resource, and any aperiodic monitoring resource comprises one monitoring time window.

49. The method according to any one of claims 43 to 48, further comprising:
transmitting second capability information to the first device, wherein the second capability information is used to indicate a related capability of the second device in model monitoring.

50. The method according to claim 49, wherein the second capability information comprises at least one of following information:

whether to support an allocation mode of a monitoring resource based on numbering information;
whether to support an allocation mode of a periodic monitoring resource based on the numbering information;
whether to support an allocation mode of a first monitoring resource based on the numbering information;
whether to support an allocation mode of a second monitoring resource based on the numbering information;
whether to support an allocation mode of an aperiodic monitoring resource based on the numbering information;
whether to support an allocation mode of a third monitoring resource based on the numbering information;
whether to support an allocation mode of a fourth monitoring resource based on the numbering information;
whether to support an allocation mode of a monitoring resource based on independent monitoring resource configuration; or

a supported monitoring resource allocation mode,

wherein the first monitoring resource is a periodic monitoring resource, and any resource repetition period within the periodic monitoring resource comprises a plurality of monitoring time windows; the second monitoring resource is the periodic monitoring resource, and any resource repetition period within the periodic monitoring resource comprises one monitoring time window; the third monitoring resource is an aperiodic monitoring resource, and any aperiodic monitoring resource comprises a plurality of monitoring time windows; and the fourth monitoring resource is the aperiodic monitoring resource, and any aperiodic monitoring resource comprises one monitoring time window.

51. The method according to any one of claims 43 to 50, wherein the first device and the second device meet one of following configurations:

   the first device is a terminal device, and the second device is a network device; or

   the first device is a network device, and the second device is a terminal device; or

   both the first device and the second device are network devices; or

   both the first device and the second device are terminal devices.

52. An information determining apparatus, comprising:

   a determining module, configured to determine at least one group of time domain information associated with a first model,

   wherein the first model is an artificial intelligence AI model or a machine learning ML model, and the time domain information is associated with a model monitoring process of the first model.

53. An information transmission apparatus, comprising:

   a transmission module, configured to transmit first information to a first device,

   wherein the first information is associated with a model monitoring process of a first model, and the first model is an artificial intelligence AI model or a machine learning ML model.

54. A first device, comprising:

   a processor;

   a transceiver connected to the processor; and

   a memory configured to store an instruction executable by the processor,

   wherein the processor is configured to load and execute the executable instruction to implement the information determining method according to any one of claims 1 to 42.

55. A second device, comprising:

   a processor;

   a transceiver connected to the processor; and

   a memory configured to store an instruction executable by the processor,

   wherein the processor is configured to load and execute the executable instruction to implement the information transmission method according to any one of claims 43 to 51.

56. A computer-readable storage medium storing a computer program, wherein the computer program is loaded and executed by a processor to implement the information determining method according to any one of claims 1 to 42 and the information transmission method according to any one of claims 43 to 51.

57. A computer program product, wherein the computer program product comprises computer instructions stored on a computer-readable storage medium, wherein a processor obtains the computer instructions from the computer-readable storage medium, such that the processor loads and executes the computer instructions to implement the information determining method according to any one of claims 1 to 42 and the information transmission method according to any one of claims 43 to 51.

Network
architecture 100

Core network
device 30

Core
network

Access network

Access network
device 20

Terminal
device10

FIG. 1

Network system
architecture 200

| NSSF | AUSF | —N13— | UDM |

N22   N12         N8        N10                30

AMF   —N11—   SMF   —N7—   PCF   —N5—   AF

└N14┘                 └N15┘

N1      N2                  N4

10              20

UE   —Uu—   (R)AN   ————N3————   UPF   —N6—   DN

└N9┘

FIG. 2

Determine at least one group of time domain
information/frequency domain information
associated with a first model

310

FIG. 3

Determine time domain information of at
least one group of first resources associated
with a first model

410

FIG. 4

FIG. 5

FIG. 6

FIG. 7

```
            ┌──────────────┐
            │  Monitoring  │
          │ │ time window 1│
            └──────────────┘                    ─────▶
          a a+b                                   Time
```

FIG. 8

```
┌────────────────────────────────┐  910
│    Acquire first information    │
└────────────────────────────────┘
```

FIG. 9

```
┌────────────────────────────────┐  1010
│   Receive second information    │
└────────────────────────────────┘
```

FIG. 10

```
┌────────────────────────────────┐  1110
│    Receive third information    │
└────────────────────────────────┘
```

FIG. 11

```
┌────────────────────────────────┐  1210
│    Transmit first capability    │
│          information            │
└────────────────────────────────┘
```

FIG. 12

```
┌────────────────────────────────┐  1310
│   Receive second capability     │
│          information            │
└────────────────────────────────┘
```

FIG. 13

```
┌────────────────────────────────┐  1410
│    Transmit first information   │
└────────────────────────────────┘
```

FIG. 14

```
┌────────────────────────────────┐  1510
│ Transmit second information or  │
│        third information        │
└────────────────────────────────┘
```

FIG. 15

Determine time domain information of at least one group of first resources associated with a first model — 1610

FIG. 16

Receive first capability information — 1710

FIG. 17

Transmit second capability information — 1810

FIG. 18

Determining module 1910

Acquisition module 1920

Transmission module 1930

FIG. 19

Transmission module 2010

Determining module 2020

Receiving module 2030

FIG. 20

First device or second device 2100

Processor — 2101    Transmitter — 2103

Bus — 2105

Receiver — 2102    Memory — 2104

FIG. 21

## INTERNATIONAL SEARCH REPORT

| International application No. |
| --- |
| **PCT/CN2023/085086** |

| A. | CLASSIFICATION OF SUBJECT MATTER |
| --- | --- |

H04W24/02(2009.01)i; G06N3/02(2006.01)i

According to International Patent Classification (IPC) or to both national classification and IPC

| B. | FIELDS SEARCHED |
| --- | --- |

Minimum documentation searched (classification system followed by classification symbols)

IPC: H04W,G06N

Documentation searched other than minimum documentation to the extent that such documents are included in the fields searched

Electronic data base consulted during the international search (name of data base and, where practicable, search terms used)

CNABS, CNTXT, VEN, EPTXT, WOTXT, USTXT, CNKI, 3GPP: 人工智能, 机器学习, 神经网络, 模型, 监测, 测试, 监控, 时域, 时隙, 时频, 帧, 周期, 编号, 性能; AI, ML, model, performance, time domain, test, monitor, artificial intelligence, machine learning, period, ID

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 115827337 A (HUAWEI TECHNOLOGIES CO., LTD.) 21 March 2023 (2023-03-21) description, paragraphs [0073]-[0171], and figure 5 | 1-57 |
| X | WO 2023036268 A1 (HUAWEI TECHNOLOGIES CO., LTD.) 16 March 2023 (2023-03-16) description, page 9, paragraph 5-page 19, paragraph 8, and figure 6 | 1-57 |
| E | WO 2023187687 A1 (TELEFONAKTIEBOLAGET LM ERICSSON (PUBL)) 05 October 2023 (2023-10-05) claims 1-76, description, paragraphs [0043]-[0184], and figure 5 | 1-3, 38, 42, 43, 46, 47, 51-57 |
| A | US 10810512 B1 (VERILY LIFE SCIENCES LLC) 20 October 2020 (2020-10-20) entire document | 1-57 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **08 December 2023** | **11 December 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/085086**

| Patent document cited in search report | | | Publication date (day/month/year) | Patent family member(s) | | | Publication date (day/month/year) |
|---|---|---|---|---|---|---|---|
| CN | 115827337 | A | 21 March 2023 | WO | 2023036280 | A1 | 16 March 2023 |
| WO | 2023036268 | A1 | 16 March 2023 | CN | 115802370 | A | 14 March 2023 |
| WO | 2023187687 | A1 | 05 October 2023 | None | | | |
| US | 10810512 | B1 | 20 October 2020 | None | | | |

Form PCT/ISA/210 (patent family annex) (July 2022)